# EUROPÄISCHE PATENTSCHRIFT

(11) **EP 3 169 475 B1**
(45) Veröffentlichungstag und Bekanntmachung des Hinweises auf die Patenterteilung: **04.12.2019**
(21) Anmeldenummer: 15739207.7
(22) Anmeldetag: 07.07.2015
(51) Int. Cl.: B23K 26/00, B23K 26/06, B23K 26/073, B23K 26/0622, B23K 101/40

(54) **VERFAHREN UND VORRICHTUNG ZUM LASERBASIERTEN BEARBEITEN VON FLÄCHIGEN, KRISTALLINEN SUBSTRATEN, INSBESONDERE VON HALBLEITERSUBSTRATEN**
METHOD AND DEVICE FOR THE LASER-BASED WORKING OF TWO-DIMENSIONAL, CRYSTALLINE SUBSTRATES, IN PARTICULAR SEMICONDUCTOR SUBSTRATES
PROCÉDÉ ET DISPOSITIF D'USINAGE AU LASER DE SUBSTRATS PLATS CRISTALLINS, NOTAMMENT DE SUBSTRATS SEMICONDUCTEURS

(30) Priorität: 15.07.2014 DE 102014213775
(43) Veröffentlichungstag der Anmeldung: 24.05.2017
(73) Patentinhaber: Innolas Solutions GmbH, 82152 Krailling (DE)
(72) Erfinder: BÖHME, Rico, 09306 Rochlitz (DE); WEBER, Daniel, 86150 Augsburg (DE)
(74) Vertreter: Pfenning, Meinig & Partner mbB
(86) Internationale Anmeldenummer: PCT/EP2015/065476
(87) Internationale Veröffentlichungsnummer: WO 2016/008768

(56) Entgegenhaltungen:
- US-A1- 2002 050 489
- US-A1- 2013 119 031
- US-A1- 2013 327 389
- US-B1- 6 472 295

## Beschreibung

Die vorliegende Erfindung bezieht sich auf ein Verfahren zum laserbasierten Bearbeiten eines flächigen, kristallinen Substrats, um das Substrat in mehrere Teile zu trennen, und auf eine entsprechende Vorrichtung sowie auf die Verwendung eines solchen Verfahrens oder einer solchen Vorrichtung. Ziel ist dabei insbesondere, flächige Substrate in Form von Halbleiterwafern in mehrere Teile zu trennen (Auseinzeln der Wafer). Dabei wird mit in der Regel gepulsten Lasern mit einer Wellenlänge gearbeitet, für die die Materialien des Substrats im Wesentlichen transparent sind.

Aus dem Stand der Technik sind bereits Vorrichtungen und Verfahren zum Durchtrennen solcher Materialien mittels Laser bekannt.

Gemäß DE 10 2011 000 768 A1 kann man Laser verwenden, die vermöge ihrer Wellenlänge oder ihrer Leistung vom Material stark absorbiert werden, oder nach erster Wechselwirkung das Material stark absorbierend machen (Erwärmung mit z.B. Erzeugung von Ladungsträgern; induzierte Absorption), und dann das Material ablatieren können. Diese Methode hat bei vielen Materialien Nachteile: z.B. Verunreinigungen durch Partikelbildung bei der Ablation; Schnittkanten können Mikrorisse aufweisen aufgrund des thermischen Eintrags; Schnittkanten können Schmelzränder aufweisen; der Schnittspalt ist über die Dicke des Materials nicht gleichförmig (hat unterschiedliche Breite in unterschiedlicher Tiefe; z.B. keilförmige Schnittkerbe). Da Material verdampft oder verflüssigt werden muss, muss eine hohe mittlere Laserleistung bereitgestellt werden.

Die US 6 472 295 B1 zeigt ein Verfahren und eine Vorrichtung zum Laserschneiden eines Zielmaterials. Das Verfahren umfasst die Schritte Erzeugen von Laserimpulsen aus einem Lasersystem und Anwendung der Laserpulse an dem Zielmaterial, so dass die Laserimpulse durch das Material schneiden. Die Laserpulse erzeugen einen annähernd ellipsenförmigen Fleck, haben einen zeitlichen Puls kürzer als etwa 100 Nanosekunden und haben eine Energiedichte von etwa 2 bis etwa 20 Mal der Abtragungsschwellenenergie des Zielmaterials.

Zudem beschreibt die US 2013/327389 A1 eine Vorrichtung gemäß dem Oberbegriff der Ansprüche 12-14 und ein Verfahren gemäß dem Oberbegriff der Ansprüche 1-3, umfassend eine Schichtstruktur für eine photovoltaische Vorrichtung. Die Schichtstruktur umfasst eine Elektrode, einen Lichtabsorber, umfassend eine Schicht von Chalkopyrit-Halbleitermaterial, wie beispielsweise Kupfer-Indium-Gallium-Diselenid, angeordnet auf der Elektrode und eine transparente Elektrode.

US 2013/119031 A1 beschreibt ein Verfahren, um aus einer Materialschicht auf einem Substrat zu erzeugen, ohne Risse in der Materialschicht zu erzeugen. Dabei wird gepulstes Laserlicht eingesetzt.

Die US 2002/050489 A1 beschreibt: In einem Laserstrahlbearbeitungsverfahren wird eine Flüssigkeit, durch die ein Laserstrahl übertragen werden kann, eingesetzt. Der Laserstrahl wird auf die Targetoberfläche durch die Flüssigkeit geleitet.

Weiterhin gibt es Verfahren, bei denen ein Laser verwendet wird, bei dessen Wellenlänge das Material weitgehend transparent ist, sodass ein Brennpunkt im Inneren des Materials erzeugt werden kann. Die Intensität des Lasers muss so hoch sein, dass an diesem inneren Brennpunkt im Material des bestrahlten Substrats eine innere Schädigung stattfindet.

Letztgenannte Verfahren haben den Nachteil, dass die induzierte Rissbildung punktförmig in einer bestimmten Tiefe, bzw. an der Oberfläche, stattfindet, somit die volle Dicke des Materials erst über eine zusätzliche, mechanisch und/oder thermisch induzierte Risspropagation durchtrennt wird. Da Risse sich tendenziell ungleichförmig ausbreiten, ist die Trennfläche meist von hoher Rauheit und muss oft nachbearbeitet werden. Zudem muss derselbe Prozess mehrfach in verschiedenen Tiefen angewandt werden. Das wiederum verlängert die Prozessgeschwindigkeit um das entsprechend Vielfache.

Ausgehend vom Stand der Technik ist es daher die Aufgabe der vorliegenden Erfindung, ein Verfahren (sowie eine entsprechende Vorrichtung) zur Verfügung zu stellen, mit dem flächige, kristalline Substrate insbesondere aus Halbleitermaterialien ohne Partikelbildung, ohne Schmelzränder, mit minimaler Rissbildung am Rand, ohne merkliche Schnittspalte (also Materialverluste) mit möglichst geraden Schnittkanten und mit hoher Prozessgeschwindigkeit bearbeitet, insbesondere vollständig durchtrennt werden können.

Diese Aufgabe wird durch ein Verfahren gemäß der unabhängigen Ansprüche 1 bis 3 sowie durch Vorrichtungen gemäß der unabhängigen Ansprüche 12, 13 und 14 gelöst. Vorteilhafte Ausführungsvarianten und/oder Weiterbildungen des Verfahrens bzw. der Vorrichtung lassen sich jeweils den abhängigen Ansprüchen entnehmen. Wesentliche erfindungsgemäße Verwendungen sind im Anspruch 15 beschrieben.

Nachfolgend wird zunächst die Grundlage der vorliegenden Erfindung (Mechanismus des Trennens des Substrats in einzelne Teile gemäß der Erfindung) beschrieben.

Das Verfahren zum Trennen gemäß der Erfindung erzeugt pro Laserpuls eine Laserstrahlbrennfläche (im Unterschied zu einem Brennpunkt) mittels einer dazu geeigneten Laseroptik (nachfolgend auch als optische Anordnung bezeichnet). Die Brennfläche bestimmt die Zone der Wechselwirkung zwischen Laser und Material des Substrats. Fällt die Brennfläche in das zu trennende Material, so können die Laserparameter so gewählt werden, dass eine Wechselwirkung mit dem Material stattfindet, die gemäß der Erfindung Risszonen entlang der Brennfläche (also verteilt über diese Fläche) erzeugt. Wichtige Laserparameter sind hier die Wellenlänge des Lasers und die Impulsdauer des Lasers.

Für die Wechselwirkung des Laserlichts mit dem Material gemäß der Erfindung sollte bevorzugt folgendes gegeben sein:
1) Die Wellenlänge des Lasers ist bevorzugt so gewählt, dass das Material im wesentlichen transparent bei dieser Wellenlänge ist (konkret z.B.: Absorption <<10% pro mm Materialtiefe => γ<<1/cm; γ: Lambert-Beer'scher Absorptionskoeffizient).
2) Die Impulsdauer des Lasers ist bevorzugt so gewählt, dass innerhalb der Wechselwirkungszeit kein wesentlicher Wärmetransport (Wärmediffusion) aus der Wechselwirkungszone heraus stattfinden kann (konkret z.B.: τ << F/α, F: Größe der Laserstrahlbrennfläche, τ Laserimpulsdauer, a: Wärmediffusionskonstante des Materials).
3) Die Pulsenergie des Lasers ist bevorzugt so gewählt, dass die Intensität in der Wechselwirkungszone, also in der Brennfläche eine induzierte Absorption erzeugt, welche zu einer lokalen Erwärmung des Materials über die Brennfläche führt, welche wiederum zu Rissbildungen über die Brennfläche infolge des in das Material eingebrachten thermischen Stresses führt.
4) Weiterhin sollte die Intensität über die Impulsdauer, die Pulsenergie und die Ausdehnung bzw. Größe der Laserstrahlbrennfläche so gewählt sein, dass keine Ablation oder Aufschmelzung, sondern nur Rissbildungen im Gefüge des Festkörpers erfolgen. Diese Anforderung ist für typische Materialien wie Halbleiter oder transparenten Kristallen am leichtesten zu erfüllen mit gepulsten Lasern im Sub-Nanosekunden-Bereich, insbesondere also mit Pulsdauern von z.B. zwischen 10 und 100 ps.

Nachfolgend wird die Erzeugung der Geometrie einer gewünschten Trennfläche (Relativbewegung zwischen Laserstrahl und Substrat entlang einer Linie auf der Substratoberfläche) beschrieben.

Die erfindungsgemäße Wechselwirkung mit dem Material erzeugt pro Laserpuls einen einzelnen (in Richtung senkrecht zur Substratoberfläche und in Vorschubrichtung des Laserstrahls gesehen) Risszonenbereich im Material über eine Brennfläche. Für das vollständige Durchtrennen des Materials wird eine Abfolge solcher Risszonenbereiche pro Laserpuls so eng aneinander entlang der gewünschten Trennlinie gesetzt, dass sich eine laterale Verbindung der Risszonenbereiche zu einer gewünschten Rissfläche/Kontur im Material ergibt. Dafür wird der Laser mit einer bestimmten Folgefrequenz gepulst.

Zur Erzeugung der gewünschten Trennfläche im Material kann entweder das gepulste Laserlicht mit einer parallel zur Substratebene (und ggf. auch senkrecht dazu) beweglichen optischen Anordnung über das stationäre Material bewegt werden, oder das Material selbst wird mit einer beweglichen Aufnahme an der stationären optischen Anordnung so vorbei bewegt, dass die gewünschte Trennline ausgeformt wird.

Schließlich erfolgt noch der letzte Schritt des Auftrennens des Substrats in die mehreren Teile (Separation bzw. Auseinzeln im engeren Sinn).

Die Separation des Materials entlang der erzeugten Rissfläche/kontur erfolgt dabei entweder durch Eigenspannung des Materials, oder durch eingebrachte Kräfte, z.B. mechanisch (Zug) oder thermisch (ungleichförmige Erwärmung/Abkühlung). Da erfindungsgemäß kein Material ablatiert wird, gibt es in der Regel zunächst keinen durchgehenden Spalt im Material, sondern nur eine hoch gestörte Bruchfläche (Mikrorisse), die in sich verzahnt und u.U. noch durch Brücken verbunden ist. Durch die nachfolgend eingebrachten Kräfte werden über laterales (parallel zur Substratebene erfolgendes) Risswachstum die verbliebenen Brücken getrennt und die Verzahnung überwunden, sodass sich das Material entlang der Trennfläche separieren lässt.

Nachfolgend werden die wesentlichen Merkmale eines erfindungsgemäßen Verfahrens sowie einer erfindungsgemäßen Vorrichtung anhand der Patentansprüche beschrieben.

Ansprüche 1 bis 3 beschreiben die wesentlichen Merkmale der erfindungsgemäßen Verfahren, Ansprüche 12, 13 und 14 beschreiben die wesentlichen Bauelemente von zum Durchführen der erfindungsgemäßen Verfahren ausgebildeten Vorrichtungen.

Die in den oben genannten Ansprüchen beschriebene, vermittels der optischen Anordnungen erzeugte Laserstrahlbrennfläche wird vorangehend und nachfolgend alternativ vereinfacht auch als Brennfläche des Laserstrahls bezeichnet. Erfindungsgemäß wird das Substrat durch die erfindungsgemäße Rissbildung (induzierte Absorption über die sich senkrecht zur Substratebene in das Substrat erstreckende, ausgedehnten Brennfläche) in der Substratebene gesehen in die mehreren Teil aufgetrennt bzw. ausgeeinzelt. Die erfindungsgemäße Rissbildung erfolgt somit senkrecht zur Substratebene in das Substrat bzw. in das Innere des Substrats hinein. Wie bereits beschrieben, müssen in der Regel eine Vielzahl einzelner Laserstrahlbrennflächenabschnitte entlang einer Linie auf der Substratoberfläche in das Substrat eingebracht werden, damit die einzelnen Teile des Substrats voneinander separiert werden können. Hierzu kann entweder das Substrat parallel zur Substratebene relativ zum Laserstrahl bzw. zur optischen Anordnung verfahren werden oder umgekehrt die optische Anordnung parallel zur Substratebene relativ zum ortsfest angeordneten Substrat bewegt werden.

Vorteilhafterweise werden erfindungsgemäß zusätzlich die Merkmale mindestens eines der abhängigen Verfahrens- oder Vorrichtungsansprüche realisiert. Dabei können auch die Merkmale mehrere abhängiger Ansprüche in beliebiger Kombination realisiert werden.

Unter dem Begriff der Fläche (also Laserstrahlbrennfläche) wird im mathematischen Sinn ein in zwei Dimensionen endlich ausgedehntes Gebilde verstanden. Dabei kann die Ausdehnung der Laserstrahlbrennfläche in den beiden besagten Dimensionen (näherungsweise) durch die volle Breite bei halbem Maximalwert (englisch: "full width at half maximum") definiert werden. Erfindungsgemäß ist die Ausdehnung der Laserstrahlbrennfläche in Richtung senkrecht zu besagten beiden Dimensionen sehr viel geringer als in die besagten beiden Dimensionen, vorzugsweise um mindestens das 10-fache, das 50-fache, das 100-fache oder sogar das 500-fache geringer. Der Begriff "entlang des Flächenabschnitts" meint dabei dasselbe wie "über die gesamte Fläche dieses Abschnitts gesehen". Unter der induzierten Absorption wird ein Prozess verstanden, der zum Ausbilden von Mikrostrukturstörungen im Kristallgefüge des Substrats führt. Die Mikrostrukturstörungen definieren dann Teile einer Sollbruchfläche, entlang derer bzw. über die das Auftrennen des Substrats in die mehreren Teile erfolgt. Dabei wird (ohne Beschränkung der Allgemeinheit) angenommen, dass durch die lokale Absorption von Energie im Laserstrahlbrennflächenbereich eine Amorphisierung eintritt, durch die sich das Substratmaterial ausdehnt. Die Ausdehnungen führen zu Druckspannungen, wodurch lokal Risse im bzw. über den ausgedehnten Flächenabschnitt induzierter Absorption auftreten.

Vorteilhafterweise realisierbare Merkmale lassen sich dem abhängigen Anspruch 4 entnehmen: Das Halbleitersubstrat kann insbesondere ein 4-6 oder 3-5-Halbleitersubstrat, bevorzugt ein GaAs-Substrat, oder ein elementares Halbleitersubstrat, bevorzugt ein Si-Substrat, sein. Das Isolatorsubstrat kann insbesondere ein Oxid, bevorzugt Al₂O₃ (Saphir) oder SiO₂ (Quarz), oder ein Fluorid, bevorzugt CaF₂ oder MgF₂, oder ein Chlorid, bevorzugt NaCl, oder ein Nitrid, bevorzugt Si₃N₄ oder BN, sein. Das Substrat enthaltend oder bestehend aus mindestens ein(em) kohlenstoffbasierten/s Material mit kristalliner oder quasi-kristalliner Grundordnung kann insbesondere Kohlenstoffnanoröhren enthalten oder daraus bestehen.

Dabei kann die Ausdehnung der Laserstrahlbrennfläche in die jeweilige Raumrichtung durch diejenige Strecke, über die die Intensität im Laserstrahl mindestens halb so groß ist wie die maximal im Laserstrahl erreichte Intensität, definiert werden. Die nachfolgend als Länge *l* bezeichnete Ausdehnung der Laserstrahlbrennfläche in Strahlrichtung kann um mindestens das 10-fache größer ausgebildet werden als die Ausdehnung D der Laserstrahlbrennfläche in die zweite Richtung. Die Länge der Laserstrahlbrennfläche in Strahlrichtung kann bevorzugt um mindestens das 20-fache, bevorzugt um mindestens das 50-fache, bevorzug um mindestens das 100-fache, bevorzugt um mindestens das 500-fache, größer ausgebildet werden als die Ausdehnung D der Laserstrahlbrennfläche in die zweite Richtung. Die Breite der Laserstrahlbrennfläche in die erste Richtung kann bevorzugt um mindestens das 10-fache, bevorzugt um mindestens das 50-fache, bevorzugt um mindestens das 100-fache, größer ausgebildet werden als die Ausdehnung D der Laserstrahlbrennfläche in die zweite Richtung.

Wird ein Verfahren gemäß Anspruch 5 realisiert, so erstreckt sich der ausgedehnte Flächenabschnitt der induzierten Absorption im Inneren des Substrats von einer Oberfläche des Substrats bis in eine definierte Tiefe des Substrats (oder auch darüber hinaus). Der ausgedehnte Abschnitt der induzierten Absorption kann dabei die gesamte Substrattiefe von einer zur anderen Oberfläche umfassen. Auch ist es möglich, lediglich im Inneren des Substrats (ohne dass auch die Oberflächen des Substrats umfasst sind) länglich ausgedehnte Abschnitte der induzierten Absorption zu erzeugen.

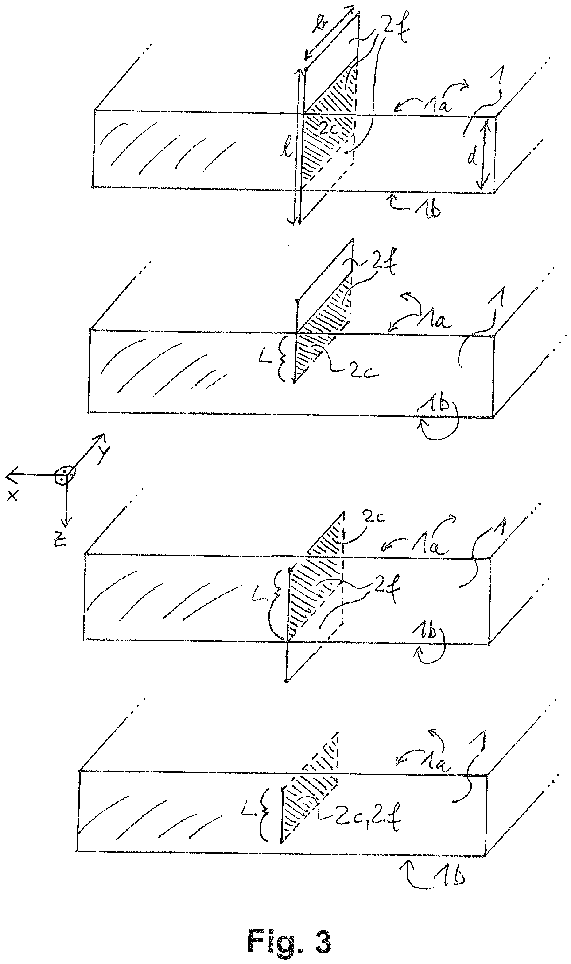

Weitere vorteilhafterweise realisierbare Merkmale lassen sich Anspruch 6 entnehmen (siehe auch nachfolgend noch beschriebene Figur 3). Das Substrat kann relativ zur Laserstrahlbrennfläche so positioniert werden, dass sich in Strahlrichtung gesehen der ausgedehnte Flächenabschnitt der induzierten Absorption im Material, also im Inneren des Substrats, von einer der beiden sich gegenüberliegenden Substratoberflächen bis hin zur anderen der beiden sich gegenüberliegenden Substratoberflächen, also über die gesamte Schichtdicke d des Substrats, erstreckt. Es kann sich in Strahlrichtung gesehen der ausgedehnte Flächenabschnitt der induzierten Absorption im Material, also im Inneren des Substrats, ausgehend von einer der beiden sich gegenüberliegenden Substratoberflächen in das Substrat hinein über 80% bis 98%, bevorzugt über 85% bis 95%, besonders bevorzugt über 90% der gesamten Schichtdicke d erstrecken. Der ausgedehnte Flächenabschnitt der induzierten Absorption (also z.B. senkrecht zur Substratebene eingebrachte Risslängen) kann sich somit sowohl von einer bestimmten Tiefe im Inneren des Substrats bis hin zur rückseitigen Oberfläche des Substrats erstrecken oder auch z.B. von der vorderseitigen Oberfläche des Substrats bis in eine bestimmte Tiefe im Inneren des Substrats. Die Schichtdicke d wird dabei jeweils senkrecht zu den beiden sich gegenüberliegenden Substratoberflächen des flächigen Substrats gemessen.

Genannte Bereichsgrenzen inkludieren jeweils den angegebenen oberen und unteren Grenzwert.

Erfindungsgemäß wird die induzierte Absorption vorteilhafterweise gemäß Anspruch 7 erzeugt. Dies geschieht mittels der Einstellung der bereits beschriebenen, nachfolgend noch im Rahmen von Beispielen erläuterten und auch in den abhängigen Ansprüchen 8 bis 9 erwähnten Laserparameter, der Parameter der optischen Anordnung sowie der geometrischen Parameter der Anordnung der einzelnen Elemente der erfindungsgemäßen Vorrichtung. Grundsätzlich ist dabei jede beliebige Merkmalskombination von Parametern, wie sie in den Ansprüchen 8 bis 9 genannt sind, möglich. Dabei bedeutet (siehe auch nachfolgend) τ << F/α, dass τ weniger als 1 %, bevorzugt weniger als 1 ‰ von F/a beträgt (dabei ist F die Flächenausdehnung der Laserstrahlbrennfläche). Beispielsweise kann die Impulsdauer τ bei 10 ps (oder auch darunter), zwischen 10 und 100 ps oder auch über 100 ps betragen. Für das Trennen von Si-Substraten wird bevorzugt ein Er:YAG Laser mit einer Wellenlänge zwischen 1.5 und 1.8 µm eingesetzt. Generell wird für Halbleitersubstrate bevorzugt ein Laser mit einer Wellenlänge eingesetzt, die so gewählt ist, dass die Photonenenergie kleiner ist als die Bandlücke des Halbleiters.

Bevorzugt ist folgendes: Dabei kann die Länge *l* der Laserstrahlbrennfläche zwischen 0.5 mm und 2 mm betragen und/oder die Breite b der Laserstrahlbrennfläche zwischen 0.05 mm und 0.2 mm betragen und/oder die Schichtdicke d des Substrats, gemessen senkrecht zu den beiden sich gegenüberliegenden Substratoberflächen, zwischen 100 µm und 500 µm betragen und/oder das Verhältnis *V1=l*/*d* aus der Länge *l* der Laserstrahlbrennfläche und der Schichtdicke d des Substrats zwischen 5 und 2 betragen und/oder die Ausdehnung *D* der Laserstrahlbrennfläche in die zweite Richtung zwischen 5 µm und 25 µm betragen.

Die Impulsdauer τ des Lasers kann so gewählt werden, dass innerhalb der Wechselwirkungszeit mit dem Material des Substrats (1) die Wärmediffusion in diesem Material vernachlässigbar ist, wobei bevorzugt keine Wärmediffusion erfolgt, wozu bevorzugt τ, F als Flächenausdehnung der Laserstrahlbrennfläche und die Wärmediffusionskonstante α des Materials des Substrats gemäß τ << F/α eingestellt werden und/oder bevorzugt τ kleiner als 10 ns, bevorzugt kleiner als 100 ps, gewählt wird. Die Pulswiederholfrequenz das Lasers kann 100 kHz betragen. Die mittlere Laserleistung kann zwischen 15 Watt und 30 Watt betragen. Der Laser kann, insbesondere für im sichtbaren Wellenlängenbereich transparente Kristalle als Substrat, ein Nd:YAG Laser mit einer Wellenlänge λ von 1064 nm oder ein Y:YAG Laser mit einer Wellenlänge λ von 1030 nm sein. Oder der Laser kann, insbesondere für im infraroten Wellenlängenbereich transparente Halbleitersubstrate, ein Er:YAG Laser mit einer Wellenlänge λ zwischen 1.5 µm und 2.1 µm sein.

Die Wellenlänge λ des Lasers kann so gewählt werden, dass das Material des Substrats für diese Wellenlänge transparent ist oder im wesentlichen transparent ist, wobei unter letzterem verstanden wird, dass die längs der Strahlrichtung erfolgte Intensitätsabnahme des Laserstrahls im Material des Substrats je Millimeter Eindringtiefe 10% oder weniger beträgt.

Die zur endgültigen Separation bzw. zum Auseinzeln des Substrats in seine mehreren Teile ggf. noch notwendigen zusätzlichen Verfahrensschritte sind in den abhängigen Ansprüchen 10 und 11 beschrieben.

Der Laserstrahl kann relativ zur Oberfläche des Substrats entlang einer zur ersten Richtung parallelen Linie bewegt werden, entlang derer das Substrat zum Erhalt mehrerer Teile zu durchtrennen ist, wobei entlang dieser Linie eine Vielzahl ausgedehnter Flächenabschnitte induzierter Absorption im Inneren des Substrats erzeugt wird. Bevorzugt ist das Verhältnis *V2=A*/*b* aus dem mittleren Abstand A unmittelbar benachbarter, also direkt nacheinander erzeugter ausgedehnter Flächenabschnitte induzierter Absorption und der Breite b der Laserstrahlbrennfläche in die erste Richtung zwischen 1.0 und 1.3, bevorzugt zwischen 1.0 und 1.1.

Wie bereits erwähnt wird entweder das Substrat relativ zur optischen Anordnung (samt Laser) oder die optische Anordnung (samt Laser) relativ zum Substrat bewegt. Unter dem Abstand A wird dabei nicht der Abstand zwischen den beiden sich unmittelbar gegenüberliegenden (in Strahlrichtung z, also ins Substrat hinein gesehen) Begrenzungen zweier unmittelbar benachbarter (also durch zeitlich aufeinanderfolgende Laserpulse erzeugter) Flächenabschnitte induzierter Absorption verstanden, sondern der Abstand zwischen ein und derselben Begrenzung (beispielsweise der in Bewegungsrichtung des Lasers entlang der gewünschten Trennlinie gesehen vorne liegenden Begrenzung) zweier unmittelbar benachbarter Flächenabschnitte induzierter Absorption. Ziel ist also, möglichst ohne Überlappung der einzelnen im Innern des Substrats erzeugten induzierten Absorptionen (ansonsten ergäben sich aufgrund näherungsweise doppelter absorbierter Intensitäten im Überlappbereich zu große Unterschiede in den Mikrostrukturstörungen im Kristallgefüge entlang der gewünschten Trennlinie) und mit möglichst geringen Lücken dazwischen benachbarte Flächenabschnitte induzierter Absorption entlang der gewünschten Trennlinie aneinanderzureihen. Die im Anspruch 14 angesprochene Rissbildung ist dabei (im Gegensatz zur erfindungsgemäß wesentlichen, induzierten Rissbildung) als Querriss, also als eine laterale Rissbildung in einer in der Ebene des Substrats liegenden Richtung zu verstehen (entsprechend des Verlaufs der Linie, entlang derer das Substrat aufgetrennt werden soll).

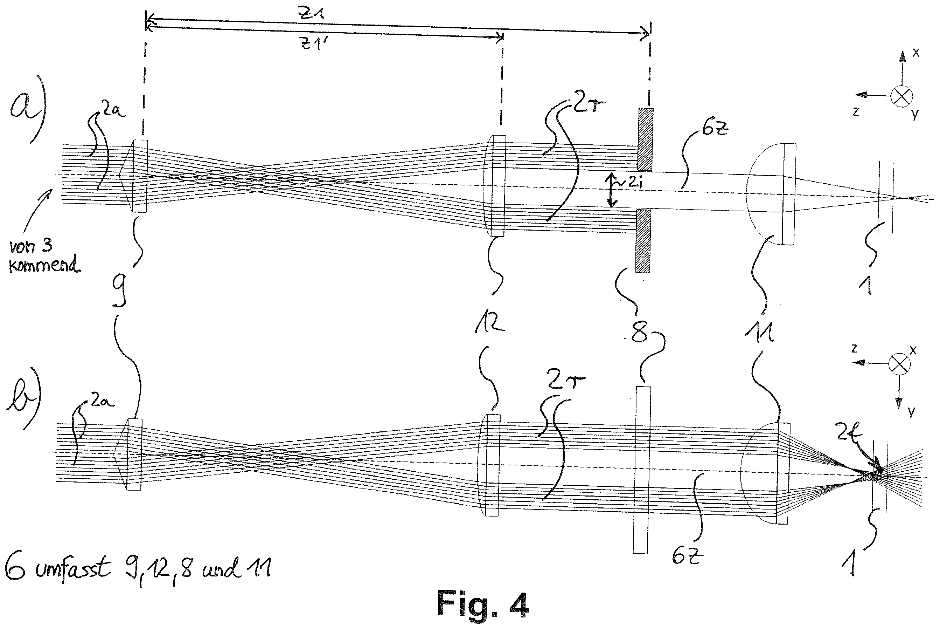

Vorteilhafte Ausbildungen erfindungsgemäßer Vorrichtungen gemäß der Ansprüche 12 bis 14 (die verschiedene mögliche Ausgestaltungsformen der optischen Anordnung zum Erzeugen und Positionieren der Laserstrahlbrennfläche beschreiben), sind wie folgt (siehe dazu auch die nachfolgenden Ausführungsbeispiele bzw. die Figuren 4 bis 7).

Eine erfindungsgemäße Vorrichtung kann dabei sowohl die optische Anordnung als auch das relativ dazu zu positionierende Substrat umfassen.

Anstelle einer Blende kann auch eine Apertur verwendet werden bzw. die Blende kann auch als Apertur ausgeformt sein. Auch ist es möglich anstelle der Blende ein diffraktives Element (mit definierten Kantenintensitäten) zu verwenden bzw. die Blende als diffraktives Element (mit definierten Kantenintensitäten) auszuformen. (Neben normalen Blenden können auch diffraktive Strahlformer zur Erzeugung eines Linienfokus mit dem Axikon kombiniert werden.)

Gemäß Anspruch 14 bedeutet das Ablenken der beiden Strahlenbündel, dass die beiden Strahlenbündel in sich gesehen jeweils parallel ablenkbar sind und als Ganzes gesehen aufeinander zu gelenkt werden.

Wesentliche erfindungsgemäße Verwendungen lassen sich Anspruch 15 entnehmen: Trennen eines Halbleitersubstrats, insbesondere eines 4-6 oder 3-5-Halbleitersubstrats, bevorzugt eines GaAs-Substrats, oder eines elementaren Halbleitersubstrats, bevorzugt eines Si-Substrats, Trennen eines Isolatorsubstrats, insbesondere eines Oxids, bevorzugt von Al₂O₃ (Saphir) oder von SiO₂ (Quarz), oder eines Fluorids, bevorzugt von CaF₂ oder von MgF₂, oder eines Chlorids, bevorzugt von NaCl, oder eines Nitrids, bevorzugt von Si₃N₄ oder von BN, oder Trennen eines Substrats enthaltend oder bestehend aus mindestens ein(em) kohlenstoffbasierten/s Material mit kristalliner oder quasi-kristalliner Grundordnung, insbesondere enthaltend oder bestehend aus Kohlenstoffnanoröhren.

Die vorliegende Erfindung weist im Vergleich zu den aus dem Stand der Technik bekannten Verfahren bzw. Vorrichtungen eine Reihe wesentlicher Vorteile auf.

Zunächst erfolgt gemäß der Erfindung die Schnittbildung ohne Partikelbildung, ohne Schmelzränder, mit minimaler Rissbildung am Rand, ohne merklichen Schnittspalt (somit ohne Verlust an Material des Substrats) und mit geraden Schnittkanten.

Erfindungsgemäß ist keine sehr hohe mittlere Laserleistung notwendig, trotzdem lassen sich vergleichsweise hohe Trenngeschwindigkeiten erzielen. Wesentlich ist dabei, dass die Erfindung pro Laserpuls (oder pro Burstimpuls) eine Laserstrahlbrennfläche (und nicht lediglich einen nicht bzw. nur sehr lokal ausgedehnten Brennpunkt) erzeugt. Dazu werden die nachfolgend noch im einzelnen dargestellten Laseroptiken eingesetzt. Die Brennfläche bestimmt so die Zone der Wechselwirkung zwischen Laser und Substrat. Fällt die Brennfläche zumindest abschnittsweise (in Tiefenrichtung gesehen) in das zu trennende Substratmaterial, so können die Laserparameter so gewählt werden, dass eine Wechselwirkung mit dem Material stattfindet, die erfindungsgemäß Risszonen entlang der gesamten Brennflächentiefe und über die gesamte Brennflächenbreite erzeugt. Wählbare Laserparameter sind beispielsweise die Wellenlänge des Lasers, die Impulsdauer des Lasers und die Pulsenergie des Lasers.

Weitere Vorteile, die das erfindungsgemäße Verfahren gegenüber beispielsweise dem mechanischen Ritzen und Brechen aufweist sind neben der fehlenden (oder zumindest minimalen) Partikelbildung, dass sich im Gegensatz zu einer mechanischen Ritzlinie ein hohes Aspektverhältnis (Verhältnis der Ausdehnung der Laserstrahlbrennfläche in Tiefenrichtung zur Ausdehnung in die zweite Richtung) erzielen lässt. Während beim mechanischen Ritzen und Brechen die Bruchlinie in das Material hinein über weitgehend unsteuerbares Risswachstum erzeugt wird, kann erfindungsgemäß ein Trennen unter einem sehr genau einstellbaren Winkel zur Substratnormalen erfolgen. Erfindungsgemäß sind auch Schrägschnitte ohne weiteres möglich.

Auch ist eine hohe Bearbeitungsgeschwindigkeit auch bei dickeren Substraten möglich.

Eine Ablation an der Oberfläche, Gratbildungen an der Oberfläche und Partikelbildungen werden vermieden (letzteres insbesondere wenn die Lage der Brennfläche relativ zum Substrat so eingestellt wird, dass das erfindungsgemäße Verfahren von der Oberfläche des Substrats ausgehend ins Innere des Substrats für die erfindungsgemäße ausgedehnte induzierte Absorption und die Rissbildungen sorgt). In diesem Fall findet somit die erste (gewollte) Beschädigung direkt an der Oberfläche statt und setzt sich auf definierte Art und Weise entlang der Rissbildungszone durch induzierte Absorption in die Substrattiefe fort.

Erfindungsgemäß lassen sich unterschiedliche Materialien, insbesondere Saphirscheiben, Halbleiterwafer, ... bearbeiten.

Auch können bereits beschichtete Materialien (z.B. TCO beschichtet) oder auch einseitig nicht transparent bedruckte Substrate erfindungsgemäß bearbeitet und aufgetrennt werden.

Erfindungsgemäß ist ein Schneiden praktisch ohne Schnittspalt möglich: Lediglich eine Materialschädigung wird erzeugt, die in der Regel im Bereich zwischen 1 und 10 µm Ausdehnung liegt. Dabei wird insbesondere kein Schnittverlust in Bezug auf Material oder Fläche generiert. Dies ist insbesondere beim Schneiden von Halbleiterwafern vorteilhaft, da Schnittspaltverluste die aktiv nutzbare Fläche des Wafers verringern würden. Durch das erfindungsgemäße Verfahren des Brennflächenschneidens ergibt sich somit eine erhöhte Flächenausbeute.

Das erfindungsgemäße Verfahren kann insbesondere auch im Inline-Betrieb von Produktionsprozessen eingesetzt werden. Besonders vorteilhaft geschieht dies bei Produktionsprozessen, die in einem Rolle-zu-Rolle-Verfahren ablaufen.

Erfindungsgemäß können Einzelpulslaser ebenso eingesetzt werden, wie Laser, die Burstimpulse generieren. Grundsätzlich ist auch der Einsatz von Lasern im Dauerstrichbetrieb denkbar.

Folgende spezifische Anwendungsgebiete ergeben sich beispielhaft:
1. Auftrennen von Saphir-LED mit der Möglichkeit den Saphirwafer ganz oder teilweise zu schneiden. Dabei kann mit dem erfindungsgemäßen Verfahren die Metallschicht ebenfalls mit durchtrennt werden, dies in einem einzigen Schritt.
2. Das Auseinzeln von Halbleiterwafern ist möglich, ohne das Tape zu beschädigen. Dazu wird die Brennfläche nur teilweise ins Innere des Substratmaterials gelegt, sodass sie an der Oberfläche beginnt und vor der getapten Folie (auf der dem Laser abgewandten rückseitigen Oberfläche des Substrats) aufhört: Beispielsweise ca. 10 % des Materials werden nicht getrennt. Die Folie bleibt somit intakt weil die Brennfläche vor der Folie "stoppt". Der Halbleiterwafer kann dann nachfolgend über mechanische Kräfte (oder thermische Kräfte, z.B. mittels CO₂-Laser) über die verbleibenden 10 % separiert werden.
3. Schneiden von beschichteten Materialien: Beispiele sind hier Bragg-Reflektoren (DBR) oder auch metallbeschichtete Saphirwafer. Auch prozessierte Siliziumwafer, auf welche bereits die aktiven Metall- oder Metalloxidschichten aufgebracht worden sind, können erfindungsgemäß geschnitten werden.

Nachfolgend wird die vorliegende Erfindung nun anhand einiger auf dem Vorbeschriebenen aufbauenden Ausführungsbeispielen beschrieben. Dabei zeigen:
- Fig. 1: das Prinzip der erfindungsgemäßen Erzeugung einer Laserstrahlbrennfläche, mit der die erfindungsgemäße Bearbeitung eines für die Laserwellenlänge transparenten Substratmaterials (hier: Siliziumsubstrat) aufgrund der induzierten Absorption im Bereich der Laserstrahlbrennfläche erfolgen kann,
- Fig. 2: die erfindungsgemäße Positionierung der Laserstrahlbrennfläche im Substrat im Detail,
- Fig. 3: unterschiedliche Möglichkeiten der Bearbeitung des Substrats durch unterschiedliche Positionierung der Laserstrahlbrennfläche relativ zum Substrat,
- Fig. 4: eine erste erfindungsgemäß verwendbare optische Anordnung,
- Fig. 5: eine zweite erfindungsgemäß verwendbare optische Anordnung,
- Fig. 6: eine dritte erfindungsgemäß verwendbare optische Anordnung,
- Fig. 7: die erfindungsgemäße Auftrennung eines Substrats entlang schmaler Kanäle 1k zwischen Funktionsbereichen 1-1, 1-2, ... der Substratoberfläche.

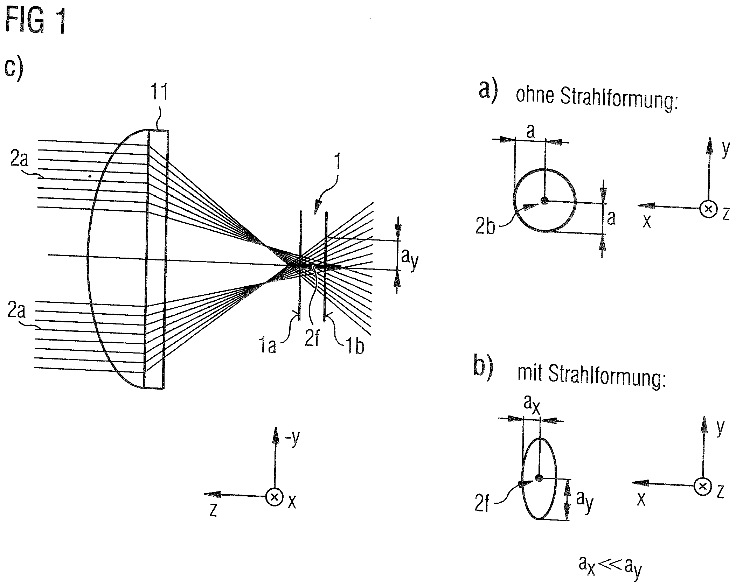

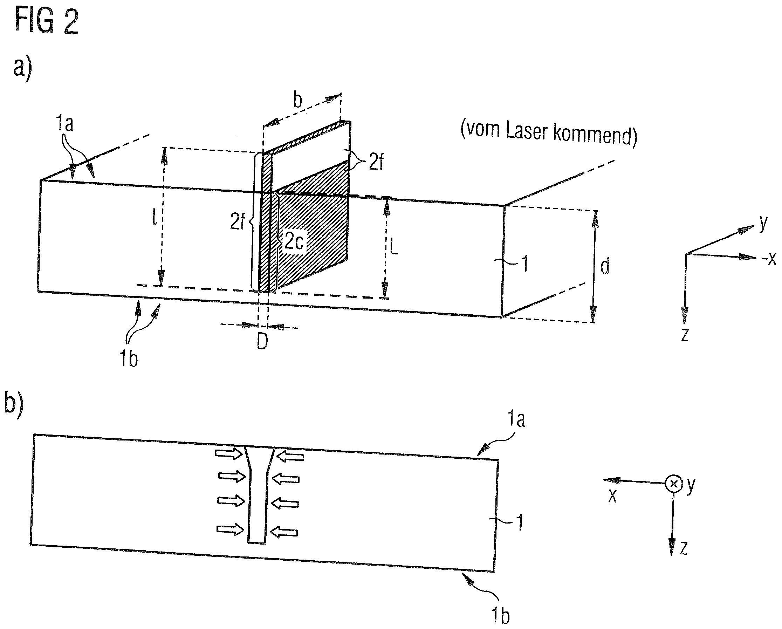

Figuren 1 und 2 skizzieren die grundlegende Vorgehensweise des erfindungsgemäßen Bearbeitungsverfahrens. Ein vom nicht gezeigten Laser 3 emittierter Laserstrahl 2a wird auf die optische Anordnung 6 eingestrahlt (von dieser ist in Figur 1c lediglich die die Strahlenbündel des Laserstrahls 2a auf das Substrat 1 fokussierende, plankonvexe Kollimationslinse 11 gezeigt - vgl. auch die in den nachfolgenden Figuren 4 bis 6 beschriebenen Ausführungsbeispiele).

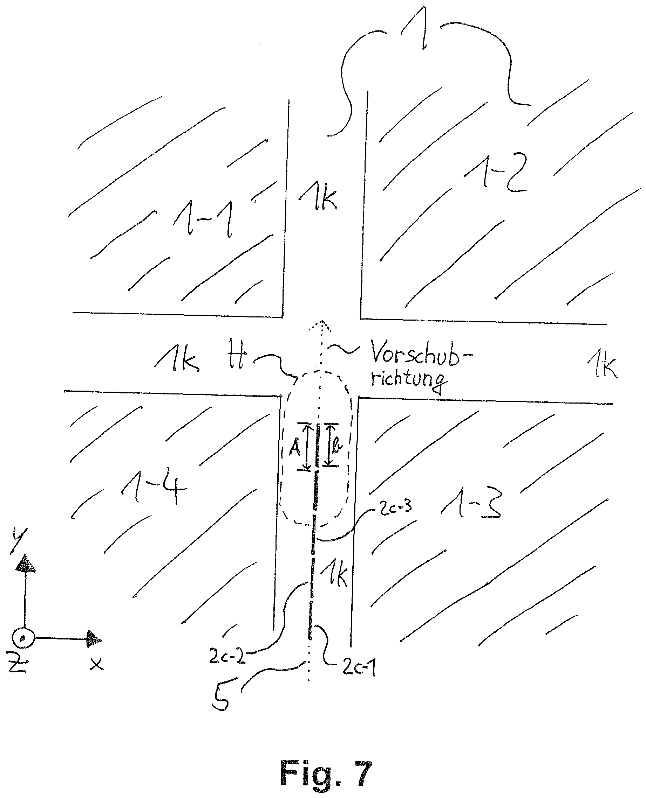

Figur 1a zeigt (in Aufsicht auf die Substratebene bzw. die x-y-Ebene senkrecht zur Einstrahlrichtung z), was ohne erfindungsgemäß wesentliche Strahlformung durch die nachfolgend noch beschriebenen Elemente 8, 7 und 13 der erfindungsgemäßen optischen Anordnungen passieren würde: Aus dem eingestrahlten Laserstrahl 2a würde strahlausgangsseitig über einen definierten Ausdehnungsbereich entlang der Strahlrichtung (Längenrichtung l bzw. Einstrahlrichtung z) lediglich eine ausgedehnte Laserstrahlbrennlinie erzeugt werden. Diese ist hier mit dem Bezugszeichen 2b bezeichnet. Die Laserstrahlbrennlinie 2b (deren Durchmesser in der Substratebene x-y beispielsweise durch die volle Breite bei halbem Maximalintensitätswert im Strahlquerschnitt definiert werden kann) wird senkrecht zur Strahlrichtung z bzw. radial vom Zentrum der Laserstrahlbrennlinie 2b nach außen gesehen von einem Bereich abfallender Strahlintensität, der nachfolgend als Halobereich bezeichnet wird, umgeben. Der Halobereich, dessen radiale Ausdehnung senkrecht zur Strahlrichtung z hier mit dem Bezugszeichen a versehen ist, kann beispielsweise als derjenige Bereich definiert werden, in dem die Intensität im Laserstrahl 2a auf ein Hundertstel (oder auch z. B. auf ein Tausendstel) der Maximalintensität in der Laserstrahlbrennlinie 2b (bzw. im Zentrum derselben) abfällt. Wie zu Fig. 7 noch genauer beschrieben wird, kann die in den äußeren Randbereichen des Halos noch vorhandene Restintensität auf funktionalen Oberflächenbereichen des auszueinzelnden Substrats zu unerwünschten Beschädigungen oder Zerstörungen führen. Eines der erfindungsgemäßen Ziele ist daher das Ausbilden eines Strahlquerschnitts bzw. einer Haloform dergestalt, dass besagte Beschädigungen bzw. Zerstörungen verhindert werden können.

Die hierzu über die erfindungswesentlichen Elemente 8, 7 und 13 (vgl. Figuren 4 bis 6) bewirkte Strahlformung ist in den Figuren 1b und 1c sichtbar: Erfindungsgemäß wird anstelle einer eindimensionalen Brennlinie 2b eine sich über einen Flächenbereich erstreckende Laserstrahlbrennfläche 2f erzeugt, die sowohl längs der Strahlrichtung z gesehen als auch in genau eine erste Richtung y senkrecht zur Strahlrichtung z gesehen ausgedehnt ist, jedoch nicht eine zweite Richtung x, die sowohl senkrecht zur ersten Richtung y als auch zur Strahlrichtung z ist, ausgedehnt ist (x, y, z = kartesisches Koordinatensystem). Zumindest abschnittsweise diese Laserstrahlbrennfläche 2f der Laserstrahlung 2a überdeckend wird im Strahlengang nach der optischen Anordnung 6 das zu bearbeitende, flächige Substrat 1 positioniert. Das Bezugszeichen 1a bezeichnet die der optischen Anordnung 6 bzw. dem Laser 3 zugewandte Oberfläche des flächigen Substrats, das Bezugszeichen 1b die hierzu üblicherweise parallele, beabstandete rückseitige Oberfläche des Substrats 1. Die Substratdicke (senkrecht zu den Flächen 1a und 1b, also zur Substratebene gemessen) wird mit dem Bezugszeichen d bezeichnet; vgl. Figur 2.

Durch die nachfolgend noch im Detail beschriebene erfindungsgemäße Strahlformung wird der im Querschnitt in der Substratebene x-y gesehen vormals kreisförmige Halobereich (Figur 1a) in der Ausdehnung in die zweite Richtung x (relativ zur Ausdehnung senkrecht dazu und senkrecht zur Strahlrichtung z, also zur Ausdehnung in die erste Richtung y) stark reduziert. Im Zentrum des Halobereichs wird statt einer rotationssymmetrischen Brennlinie eine abgeplattete Brennfläche erzeugt. Die Ausdehnung des wie im Fall von Figur 1a definieren Halobereichs in die x-Richtung ist mit aₓ bezeichnet, die Ausdehnung des Halobereiches in die y-Richtung mit a_{y}. Vorteilhafterweise ist aₓ um mindestens den Faktor 10, bevorzugt um mindestens den Faktor 50, bevorzugt um mindestens den Faktor 100, kleiner als a_{y}.

Wie Figur 2a zeigt, ist hier das Substrat 1 senkrecht zur Strahllängsachse und somit zur im Raum durch die optische Anordnung 6 hinter derselben erzeugten Brennfläche 2f ausgerichtet (das Substrat steht senkrecht auf der Zeichnungsebene) und entlang der Strahlrichtung z gesehen relativ zur Brennfläche 2f so positioniert, dass die Brennfläche 2f in Strahlrichtung z gesehen vor der Oberfläche 1a des Substrats beginnt und vor der Oberfläche 1b des Substrats, also noch innerhalb des Substrats, endet. Die in beiden Raumrichtungen z und y ausgedehnte Laserstrahlbrennfläche 2f erzeugt somit (bei geeigneter Laserintensität im Bereich der der Laserstrahlbrennfläche 2f, die durch die Fokussierung des Laserstrahls 2 auf einen Abschnitt der Länge l und der Breite b, also durch einen Flächenfokus der Fläche l · b sichergestellt wird) im Überdeckungsbereich der Brennfläche 2f mit dem Substrat 1, also im Material des Substrats das von der Brennfläche 2f überstrichen wird, einen entlang der Strahllängsrichtung z und über die Breitenrichtung y gesehen ausgedehnten Flächenabschnitt 2c, über den eine induzierte Absorption im Material des Substrats erzeugt wird, die entlang des Abschnitts 2c Rissbildungen im Material des Substrats induziert. Die Rissbildungen erfolgen dabei nicht nur lokal, sondern über die gesamte Fläche des ausgedehnten Abschnitts 2c der induzierten Absorption. Die Länge dieses Abschnitts 2c (also letztendlich die Länge der Überdeckung der LaserstrahlBrennfläche 2b mit dem Substrat 1 in z-Richtung) ist hier mit dem Bezugszeichen L versehen. Die Breite des Abschnitts 2c entspricht der Breite b der Brennfläche 2f. Die mittlere Ausdehnung des Abschnitts der induzierten Absorption (bzw. der Bereiche im Material des Substrats 1, die der Rissbildung unterzogen werden) in Richtung senkrecht zur Flächenausdehnung, also in x-Richtung gesehen, ist hier mit dem Bezugszeichen D bezeichnet. Diese mittlere Ausdehnung D entspricht der mittleren Ausdehnung der Laserstrahlbrennfläche 2f in x-Richtung.

Wie Figur 2a zeigt, wird somit erfindungsgemäß für die Wellenlänge λ des Laserstrahls 2a transparentes Substratmaterial durch induzierte Absorption im Bereich der Brennfläche 2f erwärmt. Figur 2b skizziert, dass sich das erwärmte Material letztendlich ausdehnt, sodass eine entsprechend induzierte Spannung zur Mikrorissbildung gemäß der Erfindung führt, wobei die Spannung an der Oberfläche 1a am größten ist.

Nachfolgend werden konkrete optische Anordnungen 6, die zur Erzeugung der Brennfläche 2f eingesetzt werden können, beschrieben. Alle Anordnungen basieren dabei auf dem Vorbeschriebenen, sodass für identische oder sich in ihrer Funktion entsprechende Bauteile bzw. Merkmale jeweils identische Bezugszeichen verwendet werden. Nachfolgend werden daher jeweils nur die Unterschiede beschrieben.

Da die letztendlich zur Separation führende Trennfläche erfindungsgemäß von hoher Qualität (hinsichtlich Bruchfestigkeit, geometrischer Präzision, Rauigkeit und der Vermeidung von Nachbearbeitungserfordernissen) ist bzw. sein soll, sollten die einzelnen (genauer: durch einzelne Laserpulse erzeugten), entlang der Trennlinie 5 (vgl. Fig. 7) auf der Oberfläche des Substrats zu positionierenden Brennflächen wie mit den nachfolgenden optischen Anordnungen beschrieben erzeugt werden (die optische Anordnung wird nachfolgend alternativ auch als Laseroptik bezeichnet). Die Rauigkeit ergibt sich dabei insbesondere aus der Ausdehnung D der Brennfläche in x-Richtung. Um bei gegebener Wellenlänge λ des Lasers 3 (Wechselwirkung mit dem Material des Substrats 1) eine geringe Ausdehnung D von beispielsweise 0.5 µm bis 2 µm erreichen zu können, sind in der Regel bestimmte Anforderungen an die numerische Apertur der Laseroptik 6 zu stellen. Diese Anforderungen werden durch die nachfolgend beschriebenen Laseroptiken 6 erfüllt.

Figur 3 zeigt für alle nachfolgend beschriebenen optischen Anordnungen 6, dass die Laserstrahlbrennfläche 2f durch geeignete Positionierung und/oder Ausrichtung der optischen Anordnung 6 relativ zum Substrat 1 sowie durch geeignete Wahl der Parameter der optischen Anordnung 6 unterschiedlich positioniert werden kann: Wie die erste Zeile aus Figur 3 skizziert, kann die Länge l der Brennfläche 2f so eingestellt werden, dass sie die Substratdicke d (hier um den Faktor 2) übertrifft. Platziert man das Substrat 1 somit in Strahllängsrichtung z gesehen mittig zur Brennfläche 2f, so wird ein ausgedehnter Abschnitt induzierter Absorption 2c über die gesamte Substratdicke d erzeugt. Im in Figur 3b zweite Zeile gezeigten Fall wird eine Brennfläche 2f der Länge l erzeugt, die in etwa der Ausdehnung des Substrats d entspricht. Da das Substrat 1 relativ zur Fläche 2f so positioniert wird, dass die Fläche 2f in einer Linie vor, also außerhalb des Substrats beginnt, ist die Länge L des ausgedehnten Abschnitts induzierter Absorption 2c (der sich hier von der Oberfläche des Substrats bis in eine definierte Substrattiefe, jedoch nicht bis zur rückseitigen Oberfläche 1b erstreckt) hier kleiner als die Länge l der Brennfläche 2f. Die dritte Zeile in Figur 3b zeigt den Fall, bei dem das Substrat 1 entlang der Strahlrichtung z gesehen partiell vor dem Beginn der Brennfläche 2f positioniert wird, sodass auch hier für die Länge l der Brennfläche l > L gilt (L = Ausdehnung des Abschnitts induzierter Absorption 2c im Substrat 1). Die Brennfläche beginnt somit im Inneren des Substrats und erstreckt sich über die rückseitige Oberfläche 1b bis außerhalb des Substrats. Die vierte Zeile in Figur 3b zeigt schließlich den Fall, bei dem die erzeugte Brennflächenlänge l kleiner als die Substratdicke d ist, sodass - bei zentrischer Positionierung des Substrats relativ zur Brennfläche in Einstrahlrichtung gesehen - die Brennfläche hier nahe der Oberfläche 1a im Inneres des Substrats beginnt und naher der Oberfläche 1b im Inneren des Substrats endet (l = 0.75 · d).

Erfindungsgemäß ist es dabei besonders vorteilhaft, die Brennflächenpositionierung so zu realisieren, dass mindestens eine der Oberflächen 1a, 1b von der Brennfläche überstrichen wird, der Abschnitt der induzierten Absorption 2c somit an mindestens einer Oberfläche beginnt. Auf diese Art und Weise lassen sich, durch Vermeidung von Ablation, Grat- und Partikelbildung an der Oberfläche, nahezu ideale Schnitte erzielen.

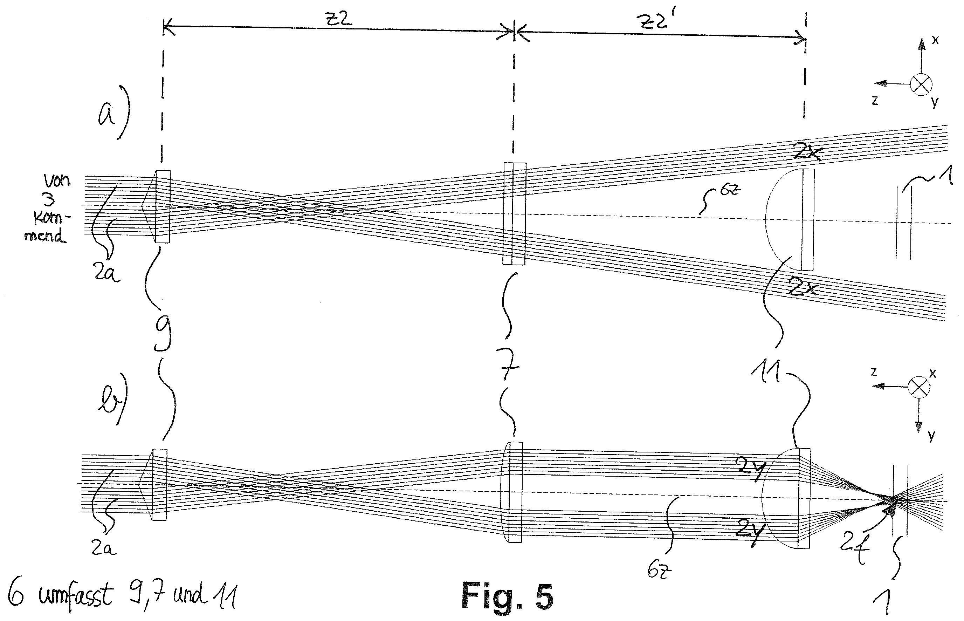

Die in Figuren 4 und 5 gezeigten optischen Anordnungen basieren auf der Grundidee, zur Bildung der Brennfläche 2f zunächst eine Optik (Element 9) mit einer nicht-sphärischen Freifläche einzusetzen, die so geformt ist, dass eine Brennfläche definierter Länge l gebildet wird. Hierzu können als optische Elemente 9 der optischen Anordnung 6 Asphären eingesetzt werden. Beispielsweise wird in den Figuren 4 und 5 ein sogenanntes Kegelprisma, das oft auch als Axicon bezeichnet wird, eingesetzt. Ein Axicon ist eine spezielle, konisch geschliffene Linse, die eine Punktquelle auf eine Linie entlang der optischen Achse bildet (oder auch einen Laserstrahl ringförmig transformiert). Der Aufbau eines solchen Axicons ist dem Fachmann grundsätzlich bekannt; der Kegelwinkel beträgt hier beispielsweise 10°. Das hier mit dem Bezugszeichen 9 bezeichnete Axicon ist mit seiner Kegelspitze entgegen der Einstrahlrichtung (hier: -z-Richtung) ausgerichtet und auf die Strahlmitte zentriert. Im Strahlengang nach der Freiflächenoptik wird eine weitere Optik eingesetzt (Element 7 bzw. 8), die die Ausdehnung des Strahlenbündels der Laserstrahlung 2a in die zweite Richtung x verringert, das Strahlenbündel in x-Richtung somit einschnürt.

Figur 4 zeigt ein erstes Beispiel für eine erfindungsgemäße Vorrichtung samt optischer Anordnung 6 zum Ausbilden einer in der y-z-Ebene ausgedehnten Laserstrahlbrennfläche 2f (optische Achse 6z der Anordnung 6 bzw. der Vorrichtung und Einstrahlrichtung in -z -Richtung). Im Strahlengang des Lasers 3 (nicht gezeigt), dessen Laserstrahl mit 2a bezeichnet ist, ist entlang der Einstrahlrichtung gesehen zunächst ein optisches Element mit einer nicht-sphärischen Freifläche, die zum Ausbilden einer in die z-Richtung ausgedehnten Laserstrahlbrennlinie ausgeformt ist, positioniert. Dieses optische Element ist hier ein Axicon 9 mit 5° Kegelwinkel, das senkrecht zur Strahlrichtung und auf den Laserstrahl 2a zentriert positioniert ist. Die Kegelspitze des Axicons 9 zeigt dabei entgegen der Einstrahlrichtung. In Strahlrichtung im Abstand z1' vom Axicon 9 ist ein kollimierendes optisches Element, hier eine plankonvexe Kollimationslinse 12, deren plane Fläche in Strahlrichtung -z zeigt, so angeordnet, dass die auf die plankonvexe Kollimationslinse 12 einfallende Laserstrahlung kollimiert, also parallel ausgerichtet wird. Der Abstand z1' der plankonvexen Kollimationslinse 12 vom Axicon 9 ist hier mit ca. 300 mm so gewählt, dass das vom Axicon 9 geformte Laserstrahlbündel ringförmig auf den außen liegenden Bereichen der Linse 12 auftrifft. Somit wird durch die Linse 12 radial beabstandet von der optischen Achse 6z der Vorrichtung ein parallel zur optischen Achse 6z verlaufendes, ringförmiges Strahlenbündel 2r erzeugt.

Strahlausgangsseitig der Linse 12 ist im Abstand z1 mit z1 > z1' (hier: z1 = 1.3 × z1') eine eindimensionale Spaltblende 8 positioniert. Die Spaltblende 8 ist mit ihrer Vorzugsrichtung (d. h. der Spaltrichtung) in die erste Richtung, also die y-Richtung, ausgerichtet. Die Spaltblende (nachfolgend alternativ auch als Schlitzblende bezeichnet) 8 ist dabei so positioniert, dass die optische Achse 6z in die zweite Richtung x gesehen mittig zwischen den beiden Spalträndern verläuft. Die Spaltbreite ist so gewählt, dass sie mit dem Innendurchmesser 2i des ringförmigen Strahlenbündels 2r ausgangsseitig der Linse 12 korrespondiert: Wie Figur 4a zeigt, werden somit entlang einer in x-Richtung sowie durch die optische Achse 6z verlaufenden Geraden gesehen die betreffenden Anteile des ringförmigen Strahlenbündels 2r durch das für Laserstrahlung der verwendeten Wellenlänge intransparente Material der Ränder der Schlitzblende 8 abgeschattet. Aufgrund der Eindimensionalität der Schlitzblende 8 erreichen jedoch entlang einer in y-Richtung und durch die optische Achse 6z verlaufenden Geraden gesehen die betreffenden Strahlungsanteile im Strahlenbündel 2r ungehindert den Raum ausgangsseitig der Schlitzblende 8 (vgl. Figur 4b).

Strahlausgangsseitig der Blende 8 und beabstandet von dieser ist zentriert um die optische Achse 6z eine weitere plankonvexe Kollimationslinse 11, die hier als Fokussierlinse dient, positioniert: Diese fokussiert sämtliche nicht durch die Blende 8 abgeschatteten Strahlanteile des vormals ringförmigen Strahlbündels 2r in die erste y und in die zweite x Richtung auf das strahlausgangsseitig dieser Linse 11 senkrecht zur optischen Achse 6z, also in der x-y-Ebene, angeordnete flächige Substrat 1. Die Linse 11 (deren plane Seite dem Substrat 1 zugewandt ist) fokussiert somit die nicht von der Blende 8 abgeschotteten Strahlanteile des vormals ringförmigen Strahlbündels 2r in einem definierten Abstand von der Linse 11 auf eine zweidimensionale Laserstrahlbrennfläche 2f mit definierter Ausdehnung in die z-Richtung (durch die Wirkung des Axicons 9) wie auch mit definierter Ausdehnung in die y-Richtung (durch die Wirkung der Blende 8); siehe hierzu die in Figur 1b gezeigte Strahlformung. Die effektive Brennweite der Linse 11 beträgt hier 25 mm, so dass die Laserstrahlbrennfläche 2f etwa im Abstand von 20 mm von der Linse 11 entsteht (dort wird das Substrat 1 positioniert).

Die optischen Eigenschaften der die rotationssystemmetrischen und auf der optischen Achse 6z positionierten Elemente 9, 12 und 11 sowie die Blende 8 umfassenden optischen Anordnung 6 (insbesondere die geometrischen Ausformungen der Elemente 9, 12, 8 und 11 sowie deren Positionierung relativ zueinander entlang der Hauptstrahlachse 6z) können dabei so gewählt werden, dass die Ausdehnung l der Laserstrahlbrennfläche 2f in z-Richtung doppelt so groß ist wie die Dicke d des Substrats in z-Richtung. Wird dann das Substrat 1 zentriert zur Brennfläche 2f positioniert (vgl. Figur 3, oberste Zeile), so erfolgt über die gesamte Substratdicke die Ausbildung des ausgedehnten Flächenabschnitts 2c induzierter Absorption. Die Ausdehnung l der Brennfläche 2f in z-Richtung kann über den Strahldurchmesser auf dem Axicon 9 eingestellt werden. Die numerische Apertur über die Brennfläche 2f kann eingestellt werden über den Abstand z1' des Axicons 9 von der Linse 12 sowie über den Kegelwinkel des Axicons 9. Auf diese Weise kann die gesamte Laserenergie in der Brennfläche 2f konzentriert werden.

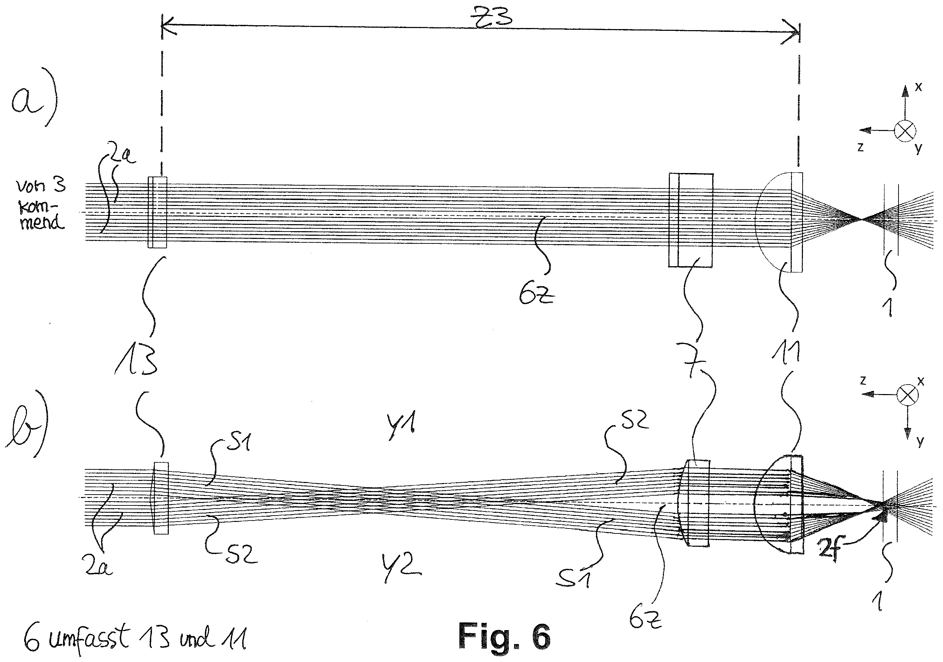

Anstelle der in Figur 4 (sowie auch den Figuren 5 und 6, siehe nachfolgend) gezeigten plankonvexen Linsen 11, 12 können auch fokussierende Meniskuslinsen oder andere höher korrigierte Fokussierlinsen (Asphären, Mehrlinser) eingesetzt werden.

Figur 5 zeigt ein weiteres Beispiel einer erfindungsgemäßen Vorrichtung, das grundsätzlich wie das in Figur 4 gezeigte ausgebildet ist. Daher werden nachfolgend nur die Unterschiede beschrieben (die optische Anordnung 6 umfasst hier die rotationssymmetrischen, auf der Achse 6z zentrierten optischen Elemente 9 und 11 sowie eine Zylinderlinse 7).

Im Strahlengang 2a wird strahlausgangsseitig des Axicons 9 anstelle der Linse 12 in Figur 4 im Abstand von z2 entlang der optischen Achse 6z gesehen die plankonvexe, fokussierende Zylinderlinse 7 positioniert. Der Abstand z2 der Linse 7 vom Axicon kann dabei wie der Abstand z1' in Figur 4 gewählt werden. Die plane Seite der Zylinderlinse 7, die in der x-y-Ebene positioniert wird, liegt auf der dem Axicon 9 abgewandten Seite. Die Vorzugsrichtung, also die Zylinderachsrichtung der Zylinderlinse 7, wird parallel zur x-Richtung ausgerichtet, und die Zylinderlinse 7 wird in Bezug auf die optische Achse 6z gesehen zentriert angeordnet. Der Abstand z2 und die Ausdehnungen der Linse 7 werden so gewählt, dass das vom Axicon 9 erzeugte, auf der Eingangsseite der Zylinderlinse 7 ringförmig divergierende Strahlbündel auf die äußeren Randbereiche der Zylinderlinse 7 fällt. Die Ausformung und Positionierung der Elemente 9, 7 erfolgt dabei so, dass entlang einer in x-Richtung und durch die optische Achse 6z verlaufenden Geraden gesehen die betreffenden, auf die Linse 7 auftreffenden Strahlanteile des ringförmig divergierenden Strahlenbündels nicht abgelenkt werden (vgl. Figur 5a), wohingegen entlang einer in y-Richtung und durch die optische Achse 6z verlaufenden Geraden gesehen die betreffenden, auf die Linse 7 auftreffenden Strahlanteile dieses Strahlenbündels durch die Zylinderlinse 7 kollimiert, also parallelgerichtet werden (Figur 5b).

In definiertem Abstand z2' hinter der Zylinderlinse 7 ist im Strahlengang zentriert um die optische Achse 6z wie beim Ausführungsbeispiel der Figur 4 die fokussierende plankonvexe Kollimationslinse 11 positioniert. Der Abstand z2' ist dabei so gewählt, dass entlang der in x-Richtung und durch die optische Achse 6z verlaufenden Geraden gesehen die betreffenden Strahlanteile 2x seitlich an der Linse 11 unabgelenkt vorbeigehen, wohingegen entlang der in y-Richtung und durch die optische Achse 6z verlaufenden Geraden gesehen Strahlanteile 2y durch die Linse 11 vollständig erfasst, abgelenkt und die betreffenden auf das strahlausgangsseitig der Linse 11 positionierte Substrat 1 fokussiert 2f werden.

Auch durch die Kombination des rotationssymmetrischen Axicons 9 mit der Zylinderlinse 7 sowie der anschließenden Fokussierung durch die rotationssymmetrische plankonvexe Kollimationslinse 11 lässt sich somit die Strahlformung aus Figur 1b realisieren. Die Ausdehnung der Laserstrahlbrennfläche 2f in y-Richtung und in z-Richtung wird dabei wie folgt eingestellt:
- Verschiebung Abstand Werkstück 1 zu Fokussierlinse 11
- Ändern der Fokuslänge der Fokussierlinse 11
- Ausleuchtung Axicon 9.

Ein weiteres Beispiel einer erfindungsgemäßen Vorrichtung zum Erzeugen einer ausgedehnten Brennfläche 2f zeigt Figur 6.

Im Strahlengang 2a des Lasers 3 (nicht gezeigt) ist zunächst ein nichtrotationssymmetrisches, mit einer Vorzugsrichtung (hier: x-Richtung) versehenes optisches Element 13 positioniert. Dieses ist als auf der Strahleingangsseite ablenkendes, auf der Strahlausgangsseite planes Element, das auf der optischen Achse 6z zentriert wird, ausgebildet. Die plane Seite weist also zum Substrat 1 hin. Die der planen Seite gegenüberliegende (also zum Laser 3 hin weisende), ablenkende Seite ist als spitzdachförmiger Doppelkeil ausgebildet, dessen zentraler Grat entlang der x-Richtung und durch die optische Achse 6z verläuft. Das Element 13 wird nachfolgend vereinfacht auch als Doppelkeil bezeichnet.

Wie Figur 6a zeigt, werden somit entlang einer in x-Richtung sowie durch die optische Achse 6z verlaufenden Geraden gesehen die betreffenden Strahlanteile des Strahlenbündels 2a durch den Doppelkeil 13 lediglich transmittiert, nicht jedoch abgelenkt. Senkrecht dazu, also entlang einer in y-Richtung und durch die optische Achse 6z verlaufenden Geraden gesehen, werden die betreffenden, beidseits der optischen Achse 6z gelegenen Teilstrahlenbündel durch die Doppelkeilstruktur in sich jeweils parallel sowie als Ganzes gesehen aufeinander zu abgelenkt (Figur 6b): Sämtliche sich im Halbraum y1 oberhalb einer parallel zur x-z-Ebene und durch die optische Achse 6z verlaufenden Ebene befindliche Strahlanteile s1 des auf den Doppelkeil 13 eingestrahlten Strahlenbündels 2a werden somit parallel und hin zum gegenüberliegenden Halbraum y2 (unterhalb besagter Ebene parallel zur x-z-Ebene und durch die optische Achse 6z verlaufend) abgelenkt. Umgekehrt werden sämtliche unterhalb besagter Ebene auf den Keil 13 einfallende Strahlanteile s2 des Strahlenbündels 2a aus dem Halbraum y2 parallel und zum Halbraum y1 hin abgelenkt.

In Strahlrichtung gesehen beabstandet vom Keil 13 (hinter dem Kreuzungspunkt der beiden Strahlanteile s1 und s2) ist wie im Beispiel von Figur 5 eine Zylinderlinse 7 positioniert: In x-Richtung gesehen wird durch diese keine Ablenkung der Strahlanteile s1 und s2 vorgenommen und in y-Richtung gesehen werden durch diese die beiden Strahlanteile s1 und s2 zur Achse 6z hin abgelenkt und kollimiert (beide Strahlanteile s1 und s2 verlaufen strahlausgangsseitig der Linse 7 parallel zur Achse 6z).

In Strahlrichtung gesehen hinter der Zylinderlinse 7, also in einem definierten Abstand z3 strahlausgangsseitig des Doppelkeils 13 ist (wie in den Beispielen aus den Figuren 4 und 5) die plankonvexe Kollimationslinse 11 positioniert. Diese ist ebenso wie in den vorangehenden Beispielen beschrieben ausgebildet und zentriert auf der Achse 6z angeordnet. Der Abstand z3 wird so gewählt, dass die beiden in Einstrahlrichtung (-z-Richtung) gesehen parallel voneinander weg divergierenden, nach der Linse 7 parallel gerichteten Strahlenbündel s1 und s2 in y-Richtung gesehen auf außen liegende Randbereiche der Kollimationslinse 11 auftreffen. Die Linse 11 fokussiert die beiden Strahlenbündel s1 und s2 somit auf eine in der y-z-Ebene ausgedehnte Laserstrahlbrennfläche 2f, in der, wie bei den anderen Ausführungsbeispielen beschrieben, das zu bearbeitende Substrat 1 positioniert wird. Auch mit einer die Elemente 11, 7 und 13 umfassenden optischen Anordnung 6 kann somit die Strahlformung gemäß Figur 1b realisiert werden.

Figur 7 skizziert in Aufsicht auf die Substratebene (x-y-Ebene) eine erfindungsgemäß mögliche Bearbeitung eines bereits mit Funktionsstrukturen 1-1, 1-2, 1-3 und 1-4 versehenen Halbleitersubstrats 1. Die hier in Quadrantenform angeordneten Funktionsstrukturen 1-1, ... dürfen beim Auseinzeln keiner Laserbestrahlung unterworfen werden (es muss somit insbesondere auch verhindert werden, dass der in den Figuren 1a und 1b gezeigte, mit den Bezugszeichen a bzw. aₓ, a_{y} angedeutete Halobereich H des Laserstrahls beim Auseinzeln die besagten Funktionsbereiche überstreicht). Eine Lasereinstrahlung darf somit ausschließlich auf den sich zwischen den Funktionsbereichen erstreckenden kanalförmigen Strukturen 1k, die keinerlei Funktionsstrukturen aufweisen und daher laserbestrahlt werden dürfen, erfolgen.

Wie Figur 7 andeutet, kann mit einer gemäß Figur 1b erzeugten, an die Breite der Kanäle 1k angepassten Laserstrahlbrennfläche 2f gearbeitet werden: Die Vorschubrichtung des Laserstrahls 2a über das Substrat 1 wird genau parallel zu einer Kanallängsachse gelegt (hier: des in y-Richtung ausgerichteten vertikal verlaufenden Kanals 1k). Gleichzeitig wird die Laserstrahlbrennfläche 2f senkrecht zur Substratebene (x-y-Ebene) und parallel zur Vorschubrichtung erzeugt. Somit erfolgt z. B. im in Figur 4 gezeigten Fall (die dem Fachmann an sich bekannte, z. B. auf Basis von Galvanometerscannern realisierbare Ablenkungsoptik ist in den Ausführungsbeispielen der Figuren 4 bis 7 nicht gezeigt) ein Vorschub des Laserstrahls 2a entlang einer Linie 5 (die einer gewünschte Trennlinie, entlang derer das Substrat aufgetrennt werden soll, entspricht) so, dass eine Vielzahl 2c-1, 2c-2, ... ausgedehnter Flächenabschnitte 2c induzierter Absorption (vgl. Figur 3) erzeugt wird. Dabei entspricht jeder Abschnitt induzierter Absorption 2c-1, ... einer durch einen einzigen Laserpuls des gepulsten Lasers im Substratmaterial entlang der Trennlinie 5 erzeugten Störungszone.

Da die einzelnen Störungszonen 2c-1, ... in der Mitte des Kanals 1k erzeugt werden und diese bzw. die Laserstrahlbrennflächen 2f jeweils parallel zu den Rändern der Funktionsstrukturen 1-1, ... verlaufen, kann durch geeignete Wahl der optischen Parameter sichergestellt werden, dass die die Brennfläche 2f umgebende Halozone H in x-Richtung einen wesentlich geringeren Durchmesser aufweist als in y-Richtung. Die Ausdehnung der Halozone H in x-Richtung wird dabei so gewählt, dass sie kleiner ist als die Kanalbreite des Kanals 1k.

Die Wiederholrate der Laserpulse wird so mit der Vorschubgeschwindigkeit des Lasers koordiniert, dass der mittlere Abstand A unmittelbar benachbarter, also durch zeitlich unmittelbar aufeinanderfolgende Laserpulse erzeugter ausgedehnter Flächenabschnitte 2c induzierter Absorption geringfügig (z. B. um den Faktor 1.1) größer ist als die Breite b der Laserstrahlbrennfläche 2f in Vorschubrichtung bzw. y-Richtung. Somit erfolgt ohne Intensitätsüberlappung ein Einbringen einer Vielzahl unmittelbar aneinandergesetzter Störungsstrukturen 2c entlang der Kanalachse 1k bzw. der gewünschten Trennlinie 5 und somit ein effizientes Auftrennen des Substrats 1 entlang solcher Kanäle 1k. Die zwischen zwei benachbarten Störungsstrukturen 2c noch verbleibenden, hier als Lücken erkennbaren Substratresten können ohne weiteres durch Einwirken mechanischer Kräfte und/oder thermischer Spannungen Rissbildungen bewirkt werden, um die beidseits der Trennlinie 5 erzeugten Substratbruchstücke endgültig voneinander abzulösen.

## Patentansprüche

1. Verfahren zum laserbasierten Bearbeiten eines flächigen, kristallinen Substrats, um das Substrat in mehrere Teile zu trennen,
bei dem der Laserstrahl (2a, 2f) eines Lasers (3) zum Bearbeiten des Substrats (1) auf letzteres gerichtet wird,
bei dem mit einer im Strahlengang des Lasers (3) positionierten optischen Anordnung (6) aus dem auf letztere eingestrahlten Laserstrahl (2a) strahlausgangsseitig der optischen Anordnung (6) eine sowohl längs der Strahlrichtung (z) gesehen als auch in genau eine erste Richtung (y) senkrecht zur Strahlrichtung (z) gesehen ausgedehnte, jedoch nicht in eine zweite Richtung (x), die sowohl senkrecht zur ersten Richtung (y) als auch zur Strahlrichtung (z) ist, ausgedehnte Laserstrahlbrennfläche (2f) geformt wird,
wobei das Substrat (1) relativ zur Laserstrahlbrennfläche (2f) so positioniert wird, dass die Laserstrahlbrennfläche (2f) im Inneren des Substrats (1) entlang eines ausgedehnten Flächenabschnitts (2c) des Substratmaterials eine induzierte Absorption erzeugt, durch die entlang dieses ausgedehnten Flächenabschnitts (2c) induzierte Rissbildungen im Substratmaterial erfolgen,
***dadurch gekennzeichnet, dass***
die Laserstrahlbrennfläche (2f) mit der optischen Anordnung (6) ausgeformt wird,
indem ein Kegelprisma oder Axicon als ein optisches Element (9) der optischen Anordnung (6) verwendet wird, das eine nicht-sphärische Freifläche aufweist, die zum Ausbilden der Laserstrahlbrennfläche (2f) mit definierter Länge *l*, also definierter Ausdehnung in Stahlrichtung (z) gesehen, ausgeformt ist, sowie
indem strahlausgangsseitig dieses optischen Elements (9) mit der nicht-sphärischen Freifläche sowie beabstandet *z1* davon eine die Ausdehnung des Laserstrahls (2a) in die zweite Richtung (x) beschneidende, also mit Vorzugsrichtung in die erste Richtung (y) ausgerichtete Blende (8) positioniert wird.

2. Verfahren zum laserbasierten Bearbeiten eines flächigen, kristallinen Substrats, um das Substrat in mehrere Teile zu trennen,
bei dem der Laserstrahl (2a, 2f) eines Lasers (3) zum Bearbeiten des Substrats (1) auf letzteres gerichtet wird,
bei dem mit einer im Strahlengang des Lasers (3) positionierten optischen Anordnung (6) aus dem auf letztere eingestrahlten Laserstrahl (2a) strahlausgangsseitig der optischen Anordnung (6) eine sowohl längs der Strahlrichtung (z) gesehen als auch in genau eine erste Richtung (y) senkrecht zur Strahlrichtung (z) gesehen ausgedehnte, jedoch nicht in eine zweite Richtung (x), die sowohl senkrecht zur ersten Richtung (y) als auch zur Strahlrichtung (z) ist, ausgedehnte Laserstrahlbrennfläche (2f) geformt wird,
wobei das Substrat (1) relativ zur Laserstrahlbrennfläche (2f) so positioniert wird, dass die Laserstrahlbrennfläche (2f) im Inneren des Substrats (1) entlang eines ausgedehnten Flächenabschnitts (2c) des Substratmaterials eine induzierte Absorption erzeugt, durch die entlang dieses ausgedehnten Flächenabschnitts (2c) induzierte Rissbildungen im Substratmaterial erfolgen,
***dadurch gekennzeichnet, dass***
die Laserstrahlbrennfläche (2f) mit der optischen Anordnung (6) ausgeformt wird,
indem ein Kegelprisma oder Axicon als optisches Element (9) der optischen Anordnung (6) verwendet wird, das eine nicht-sphärische Freifläche aufweist, die zum Ausbilden der Laserstrahlbrennfläche (2f) mit definierter Länge *l*, also definierter Ausdehnung in Stahlrichtung (z) gesehen, ausgeformt ist, sowie
indem strahlausgangsseitig dieses optischen Elements (9) mit der nicht-sphärischen Freifläche sowie beabstandet z2 davon ein den Laserstrahl (2a) in die erste Richtung (y), nicht jedoch in die zweite Richtung (x) fokussierendes optisches Element (7) positioniert wird.

3. Verfahren zum laserbasierten Bearbeiten eines flächigen, kristallinen Substrats, um das Substrat in mehrere Teile zu trennen,
bei dem der Laserstrahl (2a, 2f) eines Lasers (3) zum Bearbeiten des Substrats (1) auf letzteres gerichtet wird,
bei dem mit einer im Strahlengang des Lasers (3) positionierten optischen Anordnung (6) aus dem auf letztere eingestrahlten Laserstrahl (2a) strahlausgangsseitig der optischen Anordnung (6) eine sowohl längs der Strahlrichtung (z) gesehen als auch in genau eine erste Richtung (y) senkrecht zur Strahlrichtung (z) gesehen ausgedehnte, jedoch nicht in eine zweite Richtung (x), die sowohl senkrecht zur ersten Richtung (y) als auch zur Strahlrichtung (z) ist, ausgedehnte Laserstrahlbrennfläche (2f) geformt wird,
wobei das Substrat (1) relativ zur Laserstrahlbrennfläche (2f) so positioniert wird, dass die Laserstrahlbrennfläche (2f) im Inneren des Substrats (1) entlang eines ausgedehnten Flächenabschnitts (2c) des Substratmaterials eine induzierte Absorption erzeugt, durch die entlang dieses ausgedehnten Flächenabschnitts (2c) induzierte Rissbildungen im Substratmaterial erfolgen,
***dadurch gekennzeichnet, dass***
die Laserstrahlbrennfläche (2f) mit der optischen Anordnung (6) ausgeformt wird,
indem ein Doppelkeil als optisches Element (13) der optischen Anordnung (6) verwendet wird, mit dem Strahlenbündel (s1, s2) aus den beiden sich in der ersten Richtung (y) gesehen in Bezug auf die optische Achse (6z) der optischen Anordnung (6) gegenüberliegenden Halbräumen (y1, y2) jeweils parallel und zur optischen Achse (6z) hin abgelenkt werden, sowie
indem strahlausgangsseitig dieses optischen Elements (13) ein den Laserstrahl (2a) zumindest in die erste Richtung (y) fokussierendes optisches Element (11) positioniert wird.

4. Verfahren nach einem der vorhergehenden Ansprüche
***dadurch gekennzeichnet, dass***
das flächige, kristalline Substrat folgendes ist oder umfasst:
• Ein Halbleitersubstrat,
• ein Isolatorsubstrat,
oder
• ein Substrat enthaltend oder bestehend aus mindestens ein(em) kohlenstoffbasierten/s Material mit kristalliner oder quasi-kristalliner Grundordnung.

5. Verfahren nach einem der vorhergehenden Ansprüche,
***dadurch gekennzeichnet, dass***
das Substrat (1) relativ zur Laserstrahlbrennfläche (2f) so positioniert wird, dass sich in Strahlrichtung (z) gesehen der ausgedehnte Flächenabschnitt (2c) der induzierten Absorption im Material, also im Inneren des Substrats (1), bis zu mindestens einer der beiden sich gegenüberliegenden Substratoberflächen (1a, 1b) erstreckt.

6. Verfahren nach dem vorhergehenden Anspruch,
***dadurch gekennzeichnet, dass***
das Substrat (1) relativ zur Laserstrahlbrennfläche (2f) so positioniert wird, dass sich in Strahlrichtung (z) gesehen der ausgedehnte Flächenabschnitt (2f) der induzierten Absorption im Material, also im Inneren des Substrats (1), ausgehend von einer (1a) der beiden sich gegenüberliegenden Substratoberflächen in das Substrat (1) hinein, jedoch nicht bis hin zur anderen (1b) der beiden sich gegenüberliegenden Substratoberflächen, also nicht über die gesamte Schichtdicke d des Substrats (1), erstreckt.

7. Verfahren nach einem der vorhergehenden Ansprüche,
***dadurch gekennzeichnet, dass***
die induzierte Absorption so erzeugt wird, dass die Rissbildung im Gefüge des Substrats (1) ohne Ablation und ohne Aufschmelzen von Material des Substrats (1) erfolgt.

8. Verfahren nach einem der vorhergehenden Ansprüche,
***dadurch gekennzeichnet, dass***
als Laser (3) ein gepulster Laser verwendet wird.

9. Verfahren nach dem vorhergehenden Anspruch,
***dadurch gekennzeichnet, dass***
die Impulsdauer τ des Lasers (3) so gewählt wird, dass innerhalb der Wechselwirkungszeit mit dem Material des Substrats (1) die Wärmediffusion in diesem Material vernachlässigbar ist,
oder
dass die Pulswiederholfrequenz das Lasers (3) zwischen 10 kHz und 1000 kHz beträgt,
oder
dass der Laser (3) als Einzelpulslaser oder als Burstimpulslaser betrieben wird,
oder
dass die mittlere Laserleistung, gemessen unmittelbar strahlausgangsseitig des Lasers (3), zwischen 5 Watt und 100 Watt beträgt.

10. Verfahren nach einem der vorhergehenden Ansprüche,
***dadurch gekennzeichnet, dass***
der Laserstrahl (2a, 2f) relativ zur Oberfläche (1a) des Substrats (1) entlang einer Linie (5) bewegt wird, entlang derer das Substrat (1) zum Erhalt mehrerer Teile zu durchtrennen ist, wobei entlang dieser Linie (5) eine Vielzahl (2c-1, 2c-2,...) ausgedehnter Flächenabschnitte (2c) induzierter Absorption im Inneren des Substrats (1) erzeugt werden.

11. Verfahren nach dem vorhergehenden Anspruch,
***dadurch gekennzeichnet, dass***
während und/oder nach dem Erzeugen der Vielzahl (2c-1, 2c-2,...) ausgedehnter Flächenabschnitte (2c) induzierter Absorption im Inneren des Substrats (1) mechanische Kräfte auf das Substrat (1) ausgeübt werden und/oder thermische Spannungen in das Substrat (1) eingebracht werden, insbesondere das Substrat ungleichförmig erwärmt und wieder abgekühlt wird, um jeweils zwischen unmittelbar benachbarten (2c-1, 2c-2) ausgedehnten Flächenabschnitten (2c) induzierter Absorption eine Rissbildung zum Auftrennen des Substrats in die mehreren Teile zu bewirken.

12. Vorrichtung zum laserbasierten Bearbeiten eines flächigen, kristallinen Substrats, um das Substrat in mehrere Teile zu trennen,
umfassend einen Laser (3),
wobei mit der Vorrichtung der Laserstrahl (2a, 2f) des Lasers (3) zum Bearbeiten des Substrats (1) auf letzteres richtbar ist,
wobei im Strahlengang des Lasers (3) eine optische Anordnung (6) der Vorrichtung positioniert ist, mit der aus dem auf letztere eingestrahlten Laserstrahl (2a) strahlausgangsseitig der optischen Anordnung (6) eine sowohl längs der Strahlrichtung (z) gesehen als auch in genau eine erste Richtung (y) senkrecht zur Strahlrichtung (z) gesehen ausgedehnte, jedoch nicht in eine zweite Richtung (x), die sowohl senkrecht zur ersten Richtung (y) als auch zur Strahlrichtung (z) ist, ausgedehnte Laserstrahlbrennfläche (2f) formbar ist, und
wobei das Substrat (1) relativ zur Laserstrahlbrennfläche (2f) so positionierbar ist oder positioniert ist, dass die Laserstrahlbrennfläche (2f) im Inneren des Substrats (1) entlang eines ausgedehnten Flächenabschnitts (2c) des Substratmaterials eine induzierte Absorption erzeugt, wodurch entlang dieses ausgedehnten Flächenabschnitts (2c) induzierte Rissbildungen im Substratmaterial bewirkt werden,
***dadurch gekennzeichnet, dass***
die optische Anordnung (6) zum Ausformen der sowohl längs der Strahlrichtung (z) gesehen als auch in genau die erste Richtung (y) senkrecht zur Strahlrichtung (z) gesehen ausgedehnten, jedoch nicht in die zweite Richtung (x) ausgedehnten Laserstrahlbrennfläche (2f)
ein Kegelprisma oder Axicon als optisches Element (9) mit einer nicht-sphärischen Freifläche, die zum Ausbilden der Laserstrahlbrennfläche (2f) mit definierter Länge *l*, also definierter Ausdehnung in Stahlrichtung (z) gesehen, ausgeformt ist, sowie
strahlausgangsseitig dieses optischen Elements (9) mit der nicht-sphärischen Freifläche sowie beabstandet *z1* davon eine die Ausdehnung des Laserstrahls (2a) in die zweite Richtung (x) beschneidende, also mit Vorzugsrichtung in die erste Richtung (y) ausgerichtete Blende (8)
umfasst.

13. Vorrichtung zum laserbasierten Bearbeiten eines flächigen, kristallinen Substrats, um das Substrat in mehrere Teile zu trennen,
umfassend einen Laser (3),
wobei mit der Vorrichtung der Laserstrahl (2a, 2f) des Lasers (3) zum Bearbeiten des Substrats (1) auf letzteres richtbar ist,
wobei im Strahlengang des Lasers (3) eine optische Anordnung (6) der Vorrichtung positioniert ist, mit der aus dem auf letztere eingestrahlten Laserstrahl (2a) strahlausgangsseitig der optischen Anordnung (6) eine sowohl längs der Strahlrichtung (z) gesehen als auch in genau eine erste Richtung (y) senkrecht zur Strahlrichtung (z) gesehen ausgedehnte, jedoch nicht in eine zweite Richtung (x), die sowohl senkrecht zur ersten Richtung (y) als auch zur Strahlrichtung (z) ist, ausgedehnte Laserstrahlbrennfläche (2f) formbar ist, und
wobei das Substrat (1) relativ zur Laserstrahlbrennfläche (2f) so positionierbar ist oder positioniert ist, dass die Laserstrahlbrennfläche (2f) im Inneren des Substrats (1) entlang eines ausgedehnten Flächenabschnitts (2c) des Substratmaterials eine induzierte Absorption erzeugt, wodurch entlang dieses ausgedehnten Flächenabschnitts (2c) induzierte Rissbildungen im Substratmaterial bewirkt werden,
***dadurch gekennzeichnet, dass***
die optische Anordnung (6) zum Ausformen der sowohl längs der Strahlrichtung (z) gesehen als auch in genau die erste Richtung (y) senkrecht zur Strahlrichtung (z) gesehen ausgedehnten, jedoch nicht in die zweite Richtung (x) ausgedehnten Laserstrahlbrennfläche (2f)
ein Kegelprisma oder Axicon als optisches Element (9) mit einer nicht-sphärischen Freifläche, die zum Ausbilden der Laserstrahlbrennfläche (2f) mit definierter Länge *l*, also definierter Ausdehnung in Stahlrichtung (z) gesehen, ausgeformt ist, sowie
strahlausgangsseitig dieses optischen Elements (9) mit der nicht-sphärischen Freifläche sowie beabstandet z2 davon eine den Laserstrahl (2a) in die erste Richtung (y), nicht jedoch in die zweite Richtung (x) fokussierendes optisches Element (7)
umfasst.

14. Vorrichtung zum laserbasierten Bearbeiten eines flächigen, kristallinen Substrats, um das Substrat in mehrere Teile zu trennen,
umfassend einen Laser (3),
wobei mit der Vorrichtung der Laserstrahl (2a, 2f) des Lasers (3) zum Bearbeiten des Substrats (1) auf letzteres richtbar ist,
wobei im Strahlengang des Lasers (3) eine optische Anordnung (6) der Vorrichtung positioniert ist, mit der aus dem auf letztere eingestrahlten Laserstrahl (2a) strahlausgangsseitig der optischen Anordnung (6) eine sowohl längs der Strahlrichtung (z) gesehen als auch in genau eine erste Richtung (y) senkrecht zur Strahlrichtung (z) gesehen ausgedehnte, jedoch nicht in eine zweite Richtung (x), die sowohl senkrecht zur ersten Richtung (y) als auch zur Strahlrichtung (z) ist, ausgedehnte Laserstrahlbrennfläche (2f) formbar ist, und
wobei das Substrat (1) relativ zur Laserstrahlbrennfläche (2f) so positionierbar ist oder positioniert ist, dass die Laserstrahlbrennfläche (2f) im Inneren des Substrats (1) entlang eines ausgedehnten Flächenabschnitts (2c) des Substratmaterials eine induzierte Absorption erzeugt, wodurch entlang dieses ausgedehnten Flächenabschnitts (2c) induzierte Rissbildungen im Substratmaterial bewirkt werden,
***dadurch gekennzeichnet, dass***
die optische Anordnung (6) zum Ausformen der sowohl längs der Strahlrichtung (z) gesehen als auch in genau die erste Richtung (y) senkrecht zur Strahlrichtung (z) gesehen ausgedehnten, jedoch nicht in die zweite Richtung (x) ausgedehnten Laserstrahlbrennfläche (2f) einen Doppelkeil (13) als optisches Element (13) aufweist, mit dem Strahlenbündel (s1, s2) aus den beiden sich in der ersten Richtung (y) gesehen in Bezug auf die optische Achse (6z) der optischen Anordnung (6) gegenüberliegenden Halbräumen (y1, y2) jeweils parallel und zur optischen Achse (6z) hin ablenkbar sind, sowie
strahlausgangsseitig dieses optischen Elements (13) ein den Laserstrahl (2a) zumindest in die erste Richtung (y) fokussierendes optisches Element (11)
umfasst.

15. Verwendung eines Verfahrens oder einer Vorrichtung nach einem der vorhergehenden Ansprüche zum
Trennen eines Halbleitersubstrats,
Trennen eines Isolatorsubstrats, oder
zum Trennen eines Substrats enthaltend oder bestehend aus mindestens ein(em) kohlenstoffbasierten/s Material mit kristalliner oder quasi-kristalliner Grundordnung.

## Claims

1. Method for laser-based machining of a planar, crystalline substrate in order to separate the substrate into a plurality of parts,
in which the laser beam (2a, 2f) of a laser (3) is directed, for machining the substrate (1), onto the latter,
in which, with an optical arrangement (6) positioned in the beam path of the laser (3), a laser beam focal surface (2f) which is expanded, viewed both along the beam direction (z) and in precisely a first direction (y) perpendicular to the beam direction (z), but which is not expanded in a second direction (x) which is both perpendicular to the first direction (y) and to the beam direction (z), is formed, from the laser beam (2a) radiated onto said optical arrangement (6), on the beam output side of the optical arrangement (6),
the substrate (1) being positioned relative to the laser beam focal surface (2f) such that the laser beam focal surface (2f) produces, in the interior of the substrate (1) along an expanded surface portion (2c) of the substrate material, an induced absorption by means of which induced crack formations in the substrate material along this expanded surface portion (2c) are effected,
***characterised in that***
the laser beam focal surface (2f) is formed with the optical arrangement (6),
by using a conical prism or axicon as an optical element (9) of the optical arrangement (6), which optical element (9) has a non-spherical free surface which is formed to form the laser beam focal surface (2f) with a defined length *l*, i.e. with a defined expansion viewed in the beam direction (z), and also
by positioning a diaphragm (8), which cuts the expansion of the laser beam (2a) in the second direction (x), i.e. which is orientated with the preferential direction in the first direction (y), on the beam output side of this optical element (9) with the non-spherical free surface and also at a spacing *z1* therefrom.

2. Method for laser-based machining of a planar, crystalline substrate in order to separate the substrate into a plurality of parts,
in which the laser beam (2a, 2f) of a laser (3) is directed, for machining the substrate (1), onto the latter,
in which, with an optical arrangement (6) positioned in the beam path of the laser (3), a laser beam focal surface (2f) which is expanded, viewed both along the beam direction (z) and in precisely a first direction (y) perpendicular to the beam direction (z), but which is not expanded in a second direction (x) which is both perpendicular to the first direction (y) and to the beam direction (z), is formed, from the laser beam (2a) radiated onto said optical arrangement (6), on the beam output side of the optical arrangement (6),
the substrate (1) being positioned relative to the laser beam focal surface (2f) such that the laser beam focal surface (2f) produces, in the interior of the substrate (1) along an expanded surface portion (2c) of the substrate material, an induced absorption by means of which induced crack formations in the substrate material along this expanded surface portion (2c) are effected,
***characterised in that***
the laser beam focal surface (2f) is formed with the optical arrangement (6),
by using a conical prism or axicon as optical element (9) of the optical arrangement (6), which optical element (9) has a non-spherical free surface which is formed to form the laser beam focal surface (2f) with a defined length *l*, i.e. with a defined expansion viewed in the beam direction (z), and also
by positioning an optical element (7), which focuses the laser beam (2a) in the first direction (y), but not in the second direction (x), on the beam output side of this optical element (9) with the non-spherical free surface and also at a spacing z2 therefrom.

3. Method for laser-based machining of a planar, crystalline substrate in order to separate the substrate into a plurality of parts,
in which the laser beam (2a, 2f) of a laser (3) is directed, for machining the substrate (1), onto the latter,
in which, with an optical arrangement (6) positioned in the beam path of the laser (3), a laser beam focal surface (2f) which is expanded, viewed both along the beam direction (z) and in precisely a first direction (y) perpendicular to the beam direction (z), but which is not expanded in a second direction (x) which is both perpendicular to the first direction (y) and to the beam direction (z), is formed, from the laser beam (2a) radiated onto said optical arrangement (6), on the beam output side of the optical arrangement (6),
the substrate (1) being positioned relative to the laser beam focal surface (2f) such that the laser beam focal surface (2f) produces, in the interior of the substrate (1) along an expanded surface portion (2c) of the substrate material, an induced absorption by means of which induced crack formations in the substrate material along this expanded surface portion (2c) are effected,
***characterised in that***
the laser beam focal surface (2f) is formed with the optical arrangement (6),
by using a double wedge as optical element (13) of the optical arrangement (6), with which beam bundles (s1, s2) are deflected from the two half spaces (y1, y2), which half spaces (y1, y2) are situated, viewed in the first direction (y), oppositely relative to the optical axis (6z) of the optical arrangement (6), respectively parallel and towards the optical axis (6z), and also
by positioning an optical element (11), which focuses the laser beam (2a) at least in the first direction (y), on the beam output side of this optical element (13).

4. Method according to one of the preceding claims,
***characterised in that***
the planar, crystalline substrate is or comprises:
• a semiconductor substrate,
• an insulator substrate,
or
• a substrate comprising or consisting of at least one carbon-based material with crystalline or quasi-crystalline basic order.

5. Method according to one of the preceding claims,
***characterised in that***
the substrate (1) is positioned relative to the laser beam focal surface (2f) such that, viewed in beam direction (z), the expanded surface portion (2c) of the induced absorption in the material, i.e. in the interior of the substrate (1), extends up to at least one of the two oppositely situated substrate surfaces (1a, 1b).

6. Method according to the preceding claim,
***characterised in that***
the substrate (1) is positioned relative to the laser beam focal surface (2f) such that, viewed in beam direction (z), the expanded surface portion (2f) of the induced absorption in the material, i.e. in the interior of the substrate (1), starting from one (1a) of the two oppositely situated substrate surfaces, extends into the substrate (1), but not up to the other (1b) of the two oppositely situated substrate surfaces, i.e. not over the entire layer thickness d of the substrate (1).

7. Method according to one of the preceding claims,
***characterised in that***
the induced absorption is produced such that the crack formation in the structure of the substrate (1) is effected without ablation and without melting of material of the substrate (1).

8. Method according to one of the preceding claims,
***characterised in that***
a pulsed laser is used as laser (3).

9. Method according to the preceding claim,
***characterised in that***
the pulse duration τ of the laser (3) is chosen such that, within the interaction time with the material of the substrate (1), the heat diffusion in this material is negligible,
or
**in that** the pulse repetition frequency of the laser (3) is between 10 kHz and 1,000 kHz,
or
**in that** the laser (3) is operated as a single pulse laser or as a burst pulse laser,
or
**in that** the average laser power, measured directly on the beam output side of the laser (3), is between 5 watts and 100 watts.

10. Method according to one of the preceding claims,
***characterised in that***
the laser beam (2a, 2f) is moved, relative to the surface (1a) of the substrate (1), along a line (5) along which the substrate (1) is to be separated in order to obtain a plurality of parts, a large number (2c-1, 2c-2, ...) of expanded surface portions (2c) of induced absorption in the interior of the substrate (1) being produced along this line (5).

11. Method according to the preceding claim,
***characterised in that***
during and/or after production of the large number (2c-1, 2c-2, ...) of expanded surface portions (2c) of induced absorption in the interior of the substrate (1), mechanical forces are exerted on the substrate (1) and/or thermal stresses are introduced into the substrate (1), in particular the substrate is non-uniformly heated and cooled again in order to effect, respectively between directly adjacent (2c-1, 2c-2) expanded surface portions (2c) of induced absorption, a crack formation in order to effect separation of the substrate into the plurality of parts.

12. Device for laser-based machining of a planar, crystalline substrate in order to separate the substrate into a plurality of parts,
comprising a laser (3),
wherein with the device the laser beam (2a, 2f) of the laser (3), for machining the substrate (1), is directable onto the latter,
wherein an optical arrangement (6) of the device being positioned in the beam path of the laser (3), with which a laser beam focal surface (2f) which is expanded, viewed both along the beam direction (z) and in precisely a first direction (y) perpendicular to the beam direction (z), but which is not expanded in a second direction (x) which is both perpendicular to the first direction (y) and to the beam direction (z), can be formed, from the laser beam (2a) radiated onto said optical arrangement (6), on the beam output side of the optical arrangement (6), and
the substrate (1) being positionable or positioned relative to the laser beam focal surface (2f) such that the laser beam focal surface (2f) produces, in the interior of the substrate (1) along an expanded surface portion (2c) of the substrate material, an induced absorption, as a result of which crack formations in the substrate material induced along this expanded surface portion (2c) are effected,
***characterised in that***
the optical arrangement (6) for forming the laser beam focal surface (2f) which is expanded, viewed both along the beam direction (z) and viewed in precisely the first direction (y) perpendicular to the beam direction (z), but which is not expanded in the second direction (x), comprises a conical prism or axicon as optical element (9) with a non-spherical free surface which is formed to form the laser beam focal surface (2f) with a defined length *l*, i.e. with a defined expansion viewed in beam direction (z), and also
on the beam output side of this optical element (9) with the non-spherical free surface and also at a spacing *z1* therefrom, a diaphragm (8) which cuts the expansion of the laser beam (2a) in the second direction (x), i.e. which is orientated with the preferential direction in the first direction (y).

13. Device for laser-based machining of a planar, crystalline substrate in order to separate the substrate into a plurality of parts,
comprising a laser (3),
with the device
wherein the laser beam (2a, 2f) of the laser (3), for machining the substrate (1), is directable onto the latter,
wherein an optical arrangement (6) of the device being positioned in the beam path of the laser (3), with which a laser beam focal surface (2f) which is expanded, viewed both along the beam direction (z) and in precisely a first direction (y) perpendicular to the beam direction (z), but which is not expanded in a second direction (x) which is both perpendicular to the first direction (y) and to the beam direction (z), can be formed, from the laser beam (2a) radiated onto said optical arrangement (6), on the beam output side of the optical arrangement (6), and
the substrate (1) being positionable or positioned relative to the laser beam focal surface (2f) such that the laser beam focal surface (2f) produces, in the interior of the substrate (1) along an expanded surface portion (2c) of the substrate material, an induced absorption, as a result of which crack formations in the substrate material induced along this expanded surface portion (2c) are effected,
***characterised in that***
the optical arrangement (6) for forming the laser beam focal surface (2f) which is expanded, viewed both along the beam direction (z) and in precisely the first direction (y) perpendicular to the beam direction (z), but which is not expanded in the second direction (x), comprises
a conical prism or axicon as optical element (9) with a non-spherical free surface which is formed to form the laser beam focal surface (2f) with a defined length *l*, i.e. with a defined expansion viewed in the beam direction (z), and also
on the beam output side of this optical element (9) with the non-spherical free surface and also at a spacing *z2* therefrom, an optical element (7) which focuses the laser beam (2a) in the first direction (y) but not in the second direction (x).

14. Device for laser-based machining of a planar, crystalline substrate in order to separate the substrate into a plurality of parts,
comprising a laser (3),
wherein with the device the laser beam (2a, 2f) of the laser (3), for machining the substrate (1), is directable onto the latter,
wherein an optical arrangement (6) of the device being positioned in the beam path of the laser (3), with which a laser beam focal surface (2f) which is expanded, viewed both along the beam direction (z) and in precisely a first direction (y) perpendicular to the beam direction (z), but which is not expanded in a second direction (x) which is both perpendicular to the first direction (y) and to the beam direction (z), can be formed, from the laser beam (2a) radiated onto said optical arrangement (6), on the beam output side of the optical arrangement (6), and
the substrate (1) being positionable or positioned relative to the laser beam focal surface (2f) such that the laser beam focal surface (2f) produces, in the interior of the substrate (1) along an expanded surface portion (2c) of the substrate material, an induced absorption, as a result of which crack formations in the substrate material induced along this expanded surface portion (2c) are effected,
***characterised in that***
the optical arrangement (6) for forming the laser beam focal surface (2f) which is expanded, viewed both along the beam direction (z) and in precisely the first direction (y) perpendicular to the beam direction (z), but which is not expanded in the second direction (x), comprises
a double wedge (13) as optical element (13) with which beam bundles (s1, s2) are deflectable from the two half spaces (y1, y2), which half spaces (y1, y2) are situated, viewed in the first direction (y), oppositely relative to the optical axis (6z) of the optical arrangement (6), respectively parallel and towards the optical axis (6z), and also
on the beam output side of this optical element (13) an optical element which focuses the laser beam (2a) at least in the first direction (y).

15. Use of a method or of a device according to one of the preceding claims for
• separating a semiconductor substrate,
• separating an insulator substrate,
or
• for separating a substrate comprising or consisting of at least one carbon-based material with crystalline or quasi-crystalline basic order.

## Revendications

1. Procédé d'usinage au laser d'un substrat cristallin plat afin de séparer le substrat en plusieurs parties,
dans lequel le rayon laser (2a, 2f) d'un laser (3) est dirigé vers le substrat (1) pour l'usinage de celui-ci,
dans lequel, avec un dispositif optique (6) positionné dans le trajet du rayon laser (3), à partir du rayon laser (2a) dirigé vers celui-ci, du côté de la sortie du rayon du dispositif optique (6), un plan focal du rayon laser (2f), étendu, vu aussi bien le long de la direction des rayons (z) que dans exactement une première direction (y) perpendiculaire à la direction du rayon (z), mais pas étendu dans une deuxième direction (x), qui est perpendiculaire à la première direction (y) ainsi qu'à la direction du rayon (z), est formé,
le substrat (1) étant positionné par rapport au plan focal du rayon laser (2f) de façon à ce que le plan focal du rayon laser (2f) génère, à l'intérieur du substrat (1), le long d'une portion de surface étendue (2c) du matériau substrat, une absorption induite qui provoque, le long de cette portion de surface étendue (2c) des formations de fissures induites dans le matériau du substrat,
**caractérisé en ce que**
le plan focal du rayon laser (2f) est formé avec le dispositif optique (6),
grâce au fait qu'un prisme conique ou un axicon est utilisé en tant qu'élément optique (9) du dispositif optique (6), qui présente une surface libre non sphérique, qui est conçue pour la formation du plan focal du rayon laser (2f) avec une longueur définie l, donc une extension définie vue dans la direction du rayon (z), ainsi que
grâce au fait que, du côté de la sortie du rayon de cet élément optique (9) avec la surface libre non sphérique, ainsi qu'à une distance z1 de celui-ci, est positionné un diaphragme (8) coupant l'extension du rayon laser (2a) dans la deuxième direction (x), donc orienté avec une direction différentielle dans la première direction (y).

2. Procédé d'usinage au laser d'un substrat cristallin plat afin de séparer le substrat en plusieurs parties,
dans lequel le rayon laser (2a, 2f) d'un laser (3) est dirigé vers le substrat (1) pour l'usinage de celui-ci,
dans lequel, avec un dispositif optique (6) positionné dans le trajet du rayon laser (3), à partir du rayon laser (2a) dirigé vers celui-ci, du côté de la sortie du rayon du dispositif optique (6), est formé un plan focal du rayon laser (2f), étendu, vu aussi bien le long de la direction des rayons (z) que dans exactement une première direction (y), perpendiculaire à la direction du rayon (z), mais pas étendu dans une deuxième direction (x), qui est perpendiculaire à la première direction (y) ainsi qu'à la direction du rayon (z),
le substrat (1) étant positionné par rapport au plan focal du rayon laser (2f) de façon à ce que le plan focal du rayon laser (2f) génère, à l'intérieur du substrat (1), le long d'une portion de surface étendue (2c) du matériau substrat, une absorption induite qui provoque, le long de cette portion de surface étendue (2c) des formations de fissures induites dans le matériau du substrat,
**caractérisé en ce que**
le plan focal du rayon laser (2f) est formé avec le dispositif optique (6),
grâce au fait qu'un prisme conique ou un axicon est utilisé en tant qu'élément optique (9) du dispositif optique (6), qui présente une surface libre non sphérique, qui est conçue pour la formation du plan focal du rayon laser (2f) avec une longueur définie l, donc une extension définie vue dans la direction du rayon (z), ainsi que
grâce au fait que, du côté de la sortie du rayon de cet élément optique (9) avec la surface libre non sphérique, ainsi qu'à une distance z2 de celui-ci, est positionné un élément optique (7) focalisant le rayon laser (2a) dans la première direction (y), mais pas dans la deuxième direction (x).

3. Procédé d'usinage au laser d'un substrat cristallin plat afin de séparer le substrat en plusieurs parties,
dans lequel le rayon laser (2a, 2f) d'un laser (3) est dirigé vers le substrat (1) pour l'usinage de celui-ci,
dans lequel, avec un dispositif optique (6) positionné dans le trajet du rayon laser (3), à partir du rayon laser (2a) dirigé vers celui-ci, du côté de la sortie du rayon du dispositif optique (6), est formé un plan focal du rayon laser (2f), étendu, vu aussi bien le long de la direction des rayons (z) que dans exactement une première direction (y), perpendiculaire à la direction du rayon (z), mais pas étendu dans une deuxième direction (x), qui est perpendiculaire à la première direction (y) ainsi qu'à la direction du rayon (z),
le substrat (1) étant positionné par rapport au plan focal du rayon laser (2f) de façon à ce que le plan focal du rayon laser (2f) génère, à l'intérieur du substrat (1), le long d'une portion de surface étendue (2c) du matériau substrat, une absorption induite qui provoque, le long de cette portion de surface étendue (2c) des formations de fissures induites dans le matériau du substrat,
**caractérisé en ce que**
le plan focal du rayon laser (2f) est formé avec le dispositif optique (6),
grâce au fait qu'une double cale est utilisée en tant qu'élément optique (13) du dispositif optique (6), avec laquelle sont déviés des faisceaux (s1, s2) provenant des deux demi-espaces (y1, y2) qui se font face, vus dans la première direction (y), par rapport à l'axe optique (6z) du dispositif optique (6), de manière parallèle entre eux et en direction de l'axe optique (6z), ainsi que
grâce au fait que, du côté de la sortie du rayon de cet élément optique (13), est positionné un élément optique (11) focalisant le rayon laser (2a) au moins dans la première direction (y).

4. Procédé selon l'une des revendications précédentes,
**caractérisé en ce que**
le substrat cristallin plat est ou comprend ce qui suit :
• un substrat semi-conducteur
• un substrat isolant
ou
• un substrat contenant ou constitué d'au moins un matériau à base de carbone avec une structure de base cristalline ou quasi-cristalline.

5. Procédé selon l'une des revendications précédentes,
**caractérisé en ce que**
le substrat (1) est positionné par rapport au plan focal du rayon laser (2f) de façon à ce que, vue dans la direction du rayon (z), la portion de surface étendue (2c) de l'absorption induite dans le matériau, donc à l'intérieur du substrat (1), s'étende jusqu'à au moins une des deux surfaces du substrat (1a, 1b) opposées.

6. Procédé selon la revendication précédente,
**caractérisé en ce que**
le substrat (1) est positionné par rapport au plan focal du rayon laser (2f) de façon à ce que, vue dans la direction du rayon (z), la portion de surface étendue (2c) de l'absorption induite dans le matériau, donc à l'intérieur du substrat (1), s'étende à partir d'une (1a) des deux surfaces de substrat opposées vers l'intérieur du substrat (1), mais pas jusqu'à l'autre (1b) des deux surfaces de substrat opposée, donc pas sur toute l'épaisseur de couche d du substrat (1).

7. Procédé selon l'une des revendications précédentes,
**caractérisé en ce que**
l'absorption induite est générée de façon à ce que la formation des fissures dans la structure du substrat (1) ait lieu sans ablation et sans fusion du matériau du substrat (1).

8. Procédé selon l'une des revendications précédentes,
**caractérisé en ce que**
un laser pulsé est utilisé en tant que laser (3).

9. Procédé selon la revendication précédente,
**caractérisé en ce que**
la durée d'impulsion τ du laser (3) est choisie de façon à ce que, pendant le temps d'interaction avec le matériau du substrat (1), la diffusion thermique dans ce matériau soit négligeable,
ou
la fréquence de répétition des impulsions du laser (3) est entre 10 kHz et 1000 kHz, ou
le laser (3) est utilisé comme un laser à simple impulsion ou comme un laser à impulsions en rafales,
ou
la puissance moyenne du laser, mesurée directement du côté de la sortie du rayon du laser (3), est entre 5 Watt et 100 Watt.

10. Procédé selon l'une des revendications précédentes,
**caractérisé en ce que**
le rayon laser (2a, 2f) est déplacé, par rapport à la surface (1a) du substrat (1), le long d'une ligne (5), le long de laquelle le substrat (1) doit être découpé afin d'obtenir plusieurs parties, moyennant quoi, le long de cette ligne (5), sont générées une pluralité (2c-1, 2c-2...) de portions de surface étendues (2c) d'absorption induite à l'intérieur du substrat (1).

11. Procédé selon la revendication précédente,
**caractérisé en ce que**
pendant et/ou après la production de la pluralité (2c-1, 2c-2, ...) de portions de surface étendues (2c) d'absorption induite à l'intérieur du substrat (1), des forces mécaniques sont exercées sur le substrat (1) et/ou des contraintes thermiques sont générées dans le substrat (1), plus particulièrement le substrat est chauffé de manière non uniforme puis refroidi afin de provoquer, entre des portions de surface étendues (2c) d'absorption induite directement adjacentes (2c-1, 2c-2, ...), la formation de fissures pour la découpe du substrat en plusieurs parties.

12. Dispositif d'usinage au laser d'un substrat cristallin plat afin de séparer le substrat en plusieurs parties,
comprenant un laser (3),
ce dispositif permettant de diriger le rayon laser (2a, 2f) du laser (3) pour l'usinage du substrat (1) vers celui-ci,
un dispositif optique (6) du dispositif étant positionné dans le trajet du rayon du laser (3), avec lequel, à partir du rayon laser (2a) dirigé vers celui-ci, du côté de la sortie du rayon du dispositif optique (6), peut être formé un plan focal du rayon laser (2f), étendu, vu aussi bien le long de la direction des rayons (z) que dans exactement une première direction (y), perpendiculaire à la direction du rayon (z), mais pas étendu dans une deuxième direction (x), qui est perpendiculaire à la première direction (y) ainsi qu'à la direction du rayon (z),
le substrat (1) pouvant être positionné ou étant positionné par rapport au plan focal du rayon laser (2f) de façon à ce que le plan focal du rayon laser (2f) génère, à l'intérieur du substrat (1), le long d'une portion de surface étendue (2c) du matériau du substrat, une absorption induite qui provoque, le long de cette portion de surface étendue (2c) des formations de fissures induites dans le matériau du substrat,
**caractérisé en ce que**
le dispositif optique (6) comprend, pour la formation du plan focal du rayon laser (2f) étendu, vu aussi bien le long de la direction du rayon (z) que dans exactement la première direction (y), perpendiculaire à la direction du rayon (z), mais pas dans la deuxième direction (x),
un prisme conique ou axicon, en tant qu'élément optique (9), avec une surface libre non sphérique, qui est conçu pour la formation du plan focal (2f) avec une longueur définie l, donc une extension définie vue dans la direction du rayon (z), ainsi que
du côté de la sortie du rayon de cet élément optique (9) avec la surface libre non sphérique ainsi qu'à une distance z1 de celui-ci, un diaphragme (8) coupant l'extension du rayon laser (2a) dans la deuxième direction (x), donc avec une direction préférentielle dans la première direction (y).

13. Dispositif d'usinage au laser d'un substrat cristallin plat afin de séparer le substrat en plusieurs parties,
comprenant un laser (3),
ce dispositif permettant de diriger le rayon laser (2a, 2f) du laser (3) pour l'usinage du substrat (1) vers celui-ci,
un dispositif optique (6) du dispositif étant positionné dans le trajet du rayon du laser (3), avec lequel, à partir du rayon laser (2a) dirigé vers celui-ci, du côté de la sortie du rayon du dispositif optique (6), peut être formé un plan focal du rayon laser (2f), étendu, vu aussi bien le long de la direction des rayons (z) que dans exactement une première direction (y), perpendiculaire à la direction du rayon (z), mais pas étendu dans une deuxième direction (x), qui est perpendiculaire à la première direction (y) ainsi qu'à la direction du rayon (z),
le substrat (1) pouvant être positionné ou étant positionné par rapport au plan focal du rayon laser (2f) de façon à ce que le plan focal du rayon laser (2f) génère, à l'intérieur du substrat (1), le long d'une portion de surface étendue (2c) du matériau du substrat, une absorption induite qui provoque, le long de cette portion de surface étendue (2c) des formations de fissures induites dans le matériau du substrat,
**caractérisé en ce que**
le dispositif optique (6) comprend, pour la formation du plan focal du rayon laser (2f) étendu, vu aussi bien le long de la direction du rayon (z) que dans exactement la première direction (y), perpendiculaire à la direction du rayon (z), mais pas dans la deuxième direction (x),
un prisme conique ou axicon, en tant qu'élément optique (9), avec une surface libre non sphérique, qui est conçu pour la formation du plan focal (2f) avec une longueur définie l, donc une extension définie vue dans la direction du rayon (z), ainsi que
du côté de la sortie du rayon de cet élément optique (9) avec la surface libre non sphérique ainsi qu'à une distance z2 de celui-ci, un élément optique (7) focalisant le rayon laser (2a) dans la première direction (y) mais par dans la deuxième direction (x).

14. Dispositif d'usinage au laser d'un substrat cristallin plat afin de séparer le substrat en plusieurs parties,
comprenant un laser (3),
ce dispositif permettant de diriger le rayon laser (2a, 2f) du laser (3) pour l'usinage du substrat (1) vers celui-ci,
un dispositif optique (6) du dispositif étant positionné dans le trajet du rayon du laser (3), avec lequel, à partir du rayon laser (2a) dirigé vers celui-ci, du côté de la sortie du rayon du dispositif optique (6), peut être formé un plan focal du rayon laser (2f), étendu, vu aussi bien le long de la direction des rayons (z) que dans exactement une première direction (y), perpendiculaire à la direction du rayon (z), mais pas étendu dans une deuxième direction (x), qui est perpendiculaire à la première direction (y) ainsi qu'à la direction du rayon (z),
le substrat (1) pouvant être positionné ou étant positionné par rapport au plan focal du rayon laser (2f) de façon à ce que le plan focal du rayon laser (2f) génère, à l'intérieur du substrat (1), le long d'une portion de surface étendue (2c) du matériau du substrat, une absorption induite qui provoque, le long de cette portion de surface étendue (2c) des formations de fissures induites dans le matériau du substrat,
**caractérisé en ce que**
le dispositif optique (6) comprend, pour la formation du plan focal du rayon laser (2f) étendu, vu aussi bien le long de la direction du rayon (z) que dans exactement la première direction (y), perpendiculaire à la direction du rayon (z), mais pas dans la deuxième direction (x),
une double cale (13) en tant qu'élément optique (13), avec laquelle sont déviés des faisceaux (s1, s2) provenant des deux demi-espaces (y1, y2) qui se font face, vus dans la première direction (y), par rapport à l'axe optique (6z) du dispositif optique (6), de manière parallèle entre eux et en direction de l'axe optique (6z), ainsi que
du côté de la sortie du rayon de cet élément optique (13), un élément optique (11) focalisant le rayon laser (2a) au moins dans la première direction (y).

15. Utilisation d'un procédé ou d'un dispositif selon l'une des revendications précédentes pour
la séparation d'un substrat semi-conducteur,
la séparation d'un substrat isolant ou
la séparation d'un substrat contenant ou constitué d'au moins un matériau à base de carbone avec une structure de base cristalline ou quasi-cristalline.
